# EUROPÄISCHE PATENTSCHRIFT

(11) **EP 2 695 866 B1**
(45) Veröffentlichungstag und Bekanntmachung des Hinweises auf die Patenterteilung: **24.04.2019**
(21) Anmeldenummer: 13191494.7
(22) Anmeldetag: 05.11.2013
(51) Int. Cl.: C04B 28/02, C04B 40/00, C04B 20/10

(54) **MODIFIZIERTES RHEOLOGIEADDITIV**
MODIFIED RHEOLOGY ADDITIVE
ADDITIF DE RHÉOLOGIE MODIFIÉ

(30) Priorität: 24.05.2013 EP 13169137
(43) Veröffentlichungstag der Anmeldung: 12.02.2014
(73) Patentinhaber: BASF SE, 67056 Ludwigshafen am Rhein (DE); BASF Schweiz AG, 4057 Basel (CH)
(72) Erfinder: Eißmann, Diana, 83308 Trostberg (DE); Trieflinger, Christian, 84508 Burgkirchen (DE); Flakus, Silke, 85560 Ebersberg (DE); Eberwein, Michael, 84547 Emmerting (DE)
(74) Vertreter: BASF IP Association

(56) Entgegenhaltungen:
- WO-A1-00/06631
- WO-A1-2009/156164
- WO-A1-2010/026155
- WO-A1-2012/072466
- WO-A1-2012/143205
- FR-A1- 2 864 099
- LUC NICOLEAU ET AL: "Oriented aggregation of calcium silicate hydrate platelets by the use of comb-like copolymers", SOFT MATTER, Bd. 9, Nr. 19, 1. Januar 2013 (2013-01-01) , Seite 4864, XP55088446, ISSN: 1744-683X, DOI: 10.1039/c3sm00022b

## Beschreibung

Die Erfindung betrifft ein Verfahren zur Herstellung eines pulverförmigen Trockenmörteladditivs, welches Kalziumsilikathydrat und eines oder mehrere Rheologieadditive ausgewählt aus redispergierbaren Polymerpulvern und / oder modifizierten Polysacchariden enthält, dadurch gekennzeichnet, dass das oder die Rheologieadditiv(e) in pulverförmiger Form mit einer wässrigen Suspension von Kalziumsilikathydrat in Kontakt gebracht wird.

Trockenmischungen werden in der Literatur häufig auch als Trockenmörtel bezeichnet. Als Binderkomponente sind in Trockenmörteln meist zementäre hydraulische Bindemittel enthalten. Dabei können Portlandzemente, insbesondere ausgewählt aus der Gruppe CEM I, II, III, IV und V und/oder Tonerdezemente (Aluminatzemente) zur Verwendung kommen. Weißzement ist besonders in den Fällen geeignet in denen eine entsprechende Farbgebung der Produkte eine Rolle spielt. Die genannten Zemente können einzeln oder als Mischungen eingesetzt werden. Es können optional zusätzlich zu den genannten Zementen auch puzzolanische und/oder latent hydraulische Bindemittel in der Trockenmischung enthalten sein. Bei den puzzolanisch und/oder latent hydraulischen Zusätzen werden vorzugsweise Flugasche, Mikrosilika, Metakaolin, Trassmehl, Alumosilikat, Tuff, Phonolith, Diatomeenerde, amorph gefälltes Silica, Ölschiefer sowie Hochofenschlacke mit haupsächlich nicht kristallinen Anteilen eingesetzt. Daneben kommen in Trockenmörteln meist Füllstoffe zum Einsatz, wie beispielsweise Quarzsand, Kalksteinmehl, Kreide, Marmor, Ton, Mergel, Aluminiumoxid, Talkum und/oder Schwerspat.

In "R. Bayer, H. Lutz, Dry Mortars, Ullmann's Encyclopedia of Industrial Chemistry, 6th ed., vol. 11, Wiley-VCH, Weinheim, (2003), 83-108" wird ein Überblick über die Anwendungen und Zusammensetzung von Trockenmörteln, wie Binder, Aggregate und verschiedene Zusätze gegeben. Insbesondere sind durch Zusätze wie redispergierbare Polymerpulver und/oder Celluloseether, polymervergütete zementäre Trockenmischungen gebräuchlich. Die redispergierbaren Polymerpulver und die Celluloseether beeinflussen die Rheologie der Baustoffmischungen. Zum Beispiel verdicken die Celluloseether hydraulisch abbindende, auf Zement basierende Baustoffmischungen und tragen so wesentlich zur Standfestigkeit von zum Beispiel Fliesenkleberformulierungen bei. Celluloseether haben auch positiven Einfluss auf die Wasserretention der hydraulisch abbindenden Baustoffmischungen. Redispergierbare Polymerpulver beeinflussen neben der Rheologie vor allem auch die Produkteigenschaften im ausgehärteten Zustand, insbesondere die Abriebbeständigkeit, Kratzfestigkeit, Biegezugfestigkeit, Flexibilität und Haftzugfestigkeiten auf verschiedenen Substraten.

Die Anforderungen an moderne Baustofftrockenmischungen, ganz besonders im Bereich von Fliesenklebern und einigen weiteren Anwendungsgebieten, sind bezüglich ihrer Eigenschaften im noch nicht ausgehärteten Zustand (rheologische Verabeitungseigenschaften wie Abrutschwiderstand und Wasserretention) als auch im ausgehärteten Zustand (Abriebbeständigkeit, Kratzfestigkeit, Biegezugfestigkeit und Haftzugfestigkeiten auf verschiedenen Substraten) sehr hoch. Durch bekannte Zusätze wie Wasserretentionsmittel auf Polysaccharidbasis (zum Beispiel Celluloseether) und redispergierbare Polymerpulver werden diese wichtigen Produkteigenschaften verbessert.

Allerdings stellt sich dabei das große Problem, dass sowohl redispergierbare Polymerpulver als auch Polysaccharidderivate wie Celluloseether und Stärkeether das Abbinden hydraulischer Baustoffmischungen, insbesondere zementhaltiger Baustoffmischungen, stark verzögern. Pulverförmige Erhärtungsbeschleuniger für zementäre Baustoffmischungen, welche sich aufgrund ihres festen Aggregatzustands grundsätzlich zum Einsatz in Trockenmörtelmischungen eignen, sind im Stand der Technik bekannt, haben aber gewisse Nachteile. Beispiele für solche Beschleuniger sind Calciumnitrat, Calciumformiat, Calciumchlorid und Lithiumkarbonat. Ein Nachteil der chlorid- oder nitrathaltigen Beschleuniger sind ihre negativen Auswirkungen auf die Korrosionsbeständigkeit von zum Beispiel stahlarmierten Beton. Aufgrund nationaler Normen bestehen Einsatzbeschränkungen. Ausblühungen auf der Oberfläche von erhärteten Baustoffen können, insbesondere bei Verwendung von Calciumsalzen (zum Beispiel Calciumformiat), ebenfalls ein Problem darstellen. Bei vielen Anwendungen besteht die Notwendigkeit eine noch größere Beschleunigung des Abbindens und höhere Frühfestigkeiten in zementären Systemen, wie beispielsweise in Mörtel oder Beton, zu erreichen. Die oben genannten Beschleunigertypen ermöglichen es aber dem Fachmann derzeit nicht dieses Ziel zu erreichen, auch ist bei den marktüblichen Beschleunigern, beispielsweise bei Calciumformiat, ein natürlich unerwünschter Verlust von Endfestigkeit zu beobachten, besonders bei höheren Dosierungen.

Eine Veränderung der Mengen an Rheologieadditiv (z.B. Polysaccharidether oder redispergierbares Polymerpulver) in einer Formulierung wird durch deren verzögernde Eigenschaften dann zwangsläufig auch eine Anpassung der Mengen an Beschleuniger erfordern. Dies kann und hat in komplexen Systemen, wie zum Beispiel Fliesenkleberformulierungen, die unerwünschte Folge, dass die Formulierung iterativ angepasst werden muss, wobei oftmals die ganze Palette der Formulierungsbestandteile betroffen ist. Die Verwendung der verzögernd wirkenden, nicht modifizierten Rheologieadditive des Stands der Technik verkompliziert sich damit beträchtlich und wird in der Praxis zu einem großen Problem. Auch stellt sich das Problem, dass bei üblichen Beschleunigern wie zum Beispiel Kalziumformiat die Dosiereffizienz nicht so gut ist, das heißt es werden sehr große Mengen an Kalziumformiat gebraucht um den erwünschten Beschleunigungseffekt zu erzielen. Die WO 2012/072466 betrifft eine feste Zusammensetzung, die Calciumsilikathydrat und mindestens ein in Wasser quellbares Polymer enthält, das ein Hydrogel bilden kann, sowie ein Verfahren zur Herstellung der Zusammensetzung und deren Verwendung als Abbindebeschleuniger sowie Mahlhilfe bei der Zementherstellung. Die Erfindung betrifft ferner Baustoffgemische enthaltend die Zusammensetzungen.

Die FR 2864099 offenbart Verbundteilchen (P) mit (A) einem organischen Polymerkern, der mindestens teilweise mit (B) einer oder mehreren Schichten einer Mineralphase beschichtet ist, die wasserunlösliche hydratisierte Erdalkalisilikate wie unlösliches hydratisiertes Calcium- oder Magnesiumsilikat oder Mischphase davon umfasst.

Die WO 2012/143205 betrifft ein Verfahren zur Herstellung von festen Zusammensetzungen enthaltend Calciumsilikathydrat (CSH) und ein wasserlösliches Kammpolymerisat, das sich als Weichmacher für hydraulische Bindemittel eignet, wobei folgende Verfahrensschritte durchgeführt werden: a) Inkontaktbringen einer wässrigen CSH- enthaltend Suspension mit mindestens einem Kammpolymer, b) gegebenenfalls Einstellen eines geeigneten Feststoffgehalts des Produktes aus Schritt a) durch Verdünnen mit Wasser und c) Trocknen des Produktes aus Schritt a) oder b).

Die Offenlegungsschrift WO2010/026155 A1 offenbart Suspensionen von Kalziumsilikathydrat, welche als Erhärtungsbeschleuniger für hydraulisch abbindende Systeme eingesetzt werden. Zur Herstellung dieser Suspensionen können zur Viskositätseinstellung (Verwendung als Prozesshilfsmittel in sehr geringen Mengen bei der Herstellung der Suspensionen) auch beispielsweise Celluloseether oder andere viskositätserhöhende Additive eingesetzt werden. In der WO2010/026155 A1 ist nur die Herstellung einer optional ein viskositätserhöhendes Mittel auf Kalziumsilikathydrat basierenden Beschleunigersuspension beschrieben, wobei eine Kalziumkomponente und eine Silikatkomponente in Anwesenheit eines Kammpolymerfließmittels zur Reaktion gebracht werden. Es wird aber nicht offenbart, dass bspw. ein pulverförmiger Celluloseether mit einer Suspension von Kalziumsilikathydrat beschichtet wird. Auch wird im Stand der Technik kein Hinweis darauf gegeben, dass die erhaltenen Verfahrensprodukte des Stands der Technik in der Anwendung in Mörtel oder Beton rheologiebeeinflussende Eigenschaften hätten. Insbesondere wird keinerlei Hinweis darauf gegeben, dass pulverförmige Celluloseether oder redispergierbare Polymerpulver mit rheologiebestimmenden Eigenschaften und einer stark reduzierten Verzögerung des Abbindens hydraulischer Bindemittel erhalten werden könnten. Unter der stark reduzierten Verzögerung des Abbindens soll der Unterschied bei ansonsten gleichen Bedingungen zu den von als Abbindeverzögerer wirkenden Rheologieadditiven ausgewählt aus redispergierbaren Polymerpulvern und / oder modifizierten Polysacchariden, verstanden werden.

Die Aufgabe der vorliegenden Erfindung liegt darin Rheologieadditive zur Verfügung zu stellen, welche keine verzögernden Eigenschaften oder eine deutliche Verringerung der Verzögerung in der Anwendung in hydraulisch abbindenden Bindemittelsystemen aufweisen. Dies gelingt durch eine entsprechende Modifikation mit Kalziumsilikathydrat im Rahmen des erfindungsgemäßen Verfahrens.

Die Aufgabe wird gelöst durch ein Verfahren zur Herstellung eines pulverförmigen Trockenmörteladditivs, welches Kalziumsilikathydrat und eines oder mehrere Rheologieadditive ausgewählt aus redispergierbaren Polymerpulvern und / oder modifizierten Polysacchariden enthält, dadurch gekennzeichnet, dass das oder die Rheologieadditive in pulverförmiger Form mit einer wässrigen Suspension von Kalziumsilikathydrat in Kontakt gebracht wird.

### Detaillierte Beschreibung der Erfindung

Die erfindungsgemäß hergestellten pulverförmigen Trockenmörteladditive umfassen Kalziumsilikathydrat und eines oder mehrere Rheologieadditive ausgewählt aus redispergierbaren Polymerpulvern und/oder modifizierten Polysacchariden. Das in der erfindungsgemäßen festen Zusammensetzung enthaltene feindisperse Calciumsilikathydrat (C-S-H) kann durch Fremdionen, wie Magnesium, Aluminium oder Sulfat, modifiziert sein.

Die anorganische Komponente Calciumsilikathydrat (C-S-H) kann in den meisten Fällen bezüglich ihrer Zusammensetzung durch die folgende Summenformel beschrieben werden:
a CaO, SiO₂, b Al₂O₃, c H₂O, d Z₂O, e WO
Z ist ein Alkalimetall
W ist ein Erdalkalimetall, bevorzugt ist W ein Erdalkalimetall, welches sich von Calcium unterscheidet,

| | | |
|---|---|---|
| 0,1 ≤ a ≤ 2 | vorzugsweise | 0,66 ≤ a ≤ 1,8 |
| 0 ≤ b ≤ 1 | vorzugsweise | 0 ≤ b ≤ 0,1 |
| 1 ≤ c ≤ 6 | vorzugsweise | 1 ≤ c ≤ 6,0 |
| 0 ≤ d ≤ 1 | vorzugsweise | 0 ≤ d ≤ 0,4 |
| 0 ≤ e ≤ 2 | vorzugsweise | 0 ≤ e ≤ 0,1 |

Besonders bevorzugt sind die Molverhältnisse so gewählt, dass in der obigen Summenformel die bevorzugten Bereiche für a, b und e erfüllt sind (0,66 ≤ a ≤ 1,8; 0 ≤ b ≤ 0,1; 0 ≤ e ≤ 0.1).

Vorzugsweise liegt das Calcium-Silikat-Hydrat in den erfindungsgemäßen Zusammensetzungen in Form von Foshagit, Hillebrandit, Xonotlit, Nekoit, Clinotobermorit, 9Å - Tobermorit (Riversiderit), 11Å - Tobermorit, 14 Å - Tobermorit (Plombierit), Jennit, Metajennit, Calcium Chondrodit, Afwillit, α - C₂SH, Dellait, Jaffeit, Rosenhahnit, Killalait und/oder Suolunit vor, besonders bevorzugt als Xonotlit, 9Å-Tobermorit (Riversiderit), 11Å - Tobermorit, 14 Å - Tobermorit (Plombierit), Jennit, Metajennit, Afwillit und/oder Jaffeit. Bevorzugt beträgt das molare Verhältnis von Calcium zu Silicium im Calcium-Silikat-Hydrat von 0,6 bis 2 und besonders bevorzugt von 1,0 bis 1,8. Das molare Verhältnis von Calcium zu Wasser im Calciumsilikathydrat beträgt vorzugsweise 0,6 bis 6, besonders bevorzugt 0,6 bis 2 und insbesondere bevorzugt 0,8 bis 2.

Bevorzugt ist die Partikelgröße des Calciumsilikathydrats (C-S-H) in den erfindungsgemäßen festen Zusammensetzungen kleiner als 1.000 nm, besonders bevorzugt kleiner als 500 nm und insbesondere bevorzugt kleiner als 200 nm, gemessen durch Lichtstreuung mit dem Gerät ZetaSizer Nano der Firma Malvern.

Wichtige Formulierungsbestandteile zur Optimierung der Eigenschaften von Mörteln im plastischen Zustand (Rheologie) sind redispergierbare Polymerpulver und modifizierte Polysaccharidderivate. Die redispergierbaren Polymerpulver sind meist in der hydraulisch abbindenden Trockenmischung von 0,5 bis zu 10 Gew. % enthalten. In der hydraulisch abbindenden Trockenmischung liegen die modifizierten Polysaccharidderivate, bezogen auf die Trockenmischung, üblicherweise in Mengen von 0,01 bis 1,5 Gew. % vor, bevorzugt von 0,02 bis 1,2 Gew. %, besonders bevorzugt von 0,03 bis 1,0 Gew. %.

Bevorzugt ist unter modifizierten Polysaccharidderivaten eine organische Modifizierung zu verstehen, insbesondere eine Alkoxylierung und/oder eine Methylierung. Zur Alkoxylierung wird bevorzugt Ethylenoxyd (Ethoxylierung) und/oder Propylenoxyd (Propoxylierung) verwendet. Im Nachfolgenden sollen die Rheologieadditive weiter erläutert werden.

Als redispergierbare Polymerpulver werden (Co)polymere bezeichnet, die als wasserbasierte Dispersion durch einschlägige Polymerisationsverfahren wie zum Beispiel Emulsionspolymerisationsverfahren erhältlich sind und in einem weiteren Schritt durch geeignete Trocknungsmaßnahmen wie zum Beispiel Sprühtrockung in ein Polymerpulver überführt werden. Beim Einmischen in Wasser oder wässrige Systeme entsteht aus dem redispergierbaren Polymerpulver wieder eine wasserbasierte Dispersion, daher die Bezeichnung als redispergierbares Polymerpulver. Durch die Verwendung der redispergierbaren Dispersionspulver in wässrigen Baustoffmischungen lassen sich vor allem im ausgehärteten Zustand wichtige Produkteigenschaften wie unter anderem Abriebbeständigkeit, Kratzfestigkeit, Biegezugfestigkeit und Oberflächenhaftung auf verschiedenen Substraten verbessern. Redispergierbare Polymerpulver wirken bekanntlich in der mit Wasser angerührten Baustoffmischung im Wesentlichen als organische Binder, wobei dieser Effekt hauptsächlich auf einer durch Verdunstung von Wasser geförderten Polymerfilmbildung aus den Primärpartikeln basiert.

Geeignet sind (Co)polymere auf der Basis von einem oder mehreren ethylenisch ungesättigten Monomeren, welche jeweils aus einer oder mehreren der folgenden Monomergruppen ausgewählt werden können: Vinylaromaten, Vinylester von verzweigten oder unverzweigten Alkylcarbonsäuren mit 1 bis 15 C-Atomen, Diene, (Meth)acrylsäureestern von verzweigten oder unverzweigten Alkoholen mit 1 bis 10 C-Atomen, Vinylhalogenide und Olefine. Die Monomere sollten dabei bevorzugt hydrophoben Charakters sein.

Beispiele für bevorzugte Monomere, die unter die Gruppe der Vinylaromaten fallen sind Styrol, Vinyltoluol und α-Methylstyrol. Als bevorzugte Vinylester von verzweigten oder unverzweigten Alkylcarbonsäuren mit 1 bis 15 C-Atomen sind Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsäuren mit 5 bis 11 C-Atomen (Vinylversatate), beispielsweise VeoVa5®(Vinylpivalat), VeoVa9®, VeoVa10® und VeoVa11® (Handelsnamen der Firma Shell) zu nennen, wobei Vinylacetat und die vorstehend genannten Vinylversatate besonders bevorzugt sind. Als Diene sind bevorzugt 1,3-Butadien und Isopren geeignet, als (Meth)acrylsäureester von verzweigten oder unverzweigten Alkoholen mit 1 bis 10 C-Atomen bevorzugt Methyl(meth)acrylat, Ethyl(meth)acrylat, Propyl(meth)acrylat, n-Butyl(meth)acrylat und 2-Ethylhexylacrylat.

Bevorzugte Olefine sind Ethylen, Propylen, 1-Buten und 2-Methylpropen, besonders bevorzugt ist Ethylen. Die bevorzugten Vinylhalogenidmonomere sind Vinylchlorid und Vinylidenchlorid.

Als redispergierbare Polymerpulver geeignete (Co)polymere sind die nachfolgend aufgeführten Typen bevorzugt, wobei die sich auf die jeweiligen Monomere beziehenden Angaben in Gew. % des (Co)polymers zu verstehen sind und sich gegebenenfalls mit weiteren Monomereinheiten zu 100 Gew. % aufaddieren:
Aus der Gruppe der Polymerisate von Alkylcarbonsäurevinylestern sind bevorzugt Vinylacetat Polymere, welche gegebenenfalls teilhydrolysiert sein können; Vinylacetat-Ethylen Copolymere mit einem Ethylengehalt von 1 bis 60 Gew. %; Vinylacetat Copolymere mit 1 bis 50 Gew. % eines oder mehrerer, weiterer Vinylestermonomere wie Vinyllaurat, Vinylpivalat und insbesondere VeoVa9®, VeoVa10® und VeoVa11® (Handelsnamen der Firma Shell), wobei diese Copolymere noch als weiteres Monomer 1 bis 40 Gew. % Ethylen enthalten können; Vinylester-Ethylen-Vinylchlorid Copolymere mit einem Ethylengehalt von 1 bis 40 Gew. % und einem Vinylchloridgehalt von 20 bis 90 Gew. % (als Vinylester sind zum Beispiel Vinylacetat, Vinylpropionat, Vinylbutyrat, Vinyl-2-Ethylhexanoat, 1-Methylvinylacetat, Vinyllaurat und Vinylester von in alpha-Stellung zur Säuregruppe ein tertiäres C-Atom aufweisenden Monocarbonsäuren mit 5 bis 11 C-Atomen (Vinylversatate), beispielsweise VeoVa5® (Vinylpivalat), VeoVa9®, VeoVa10® und VeoVa11®(Handelsnamen der Firma Shell) möglich); Vinylacetat-Acrylsäureester-Copolymerisate mit 1 bis 60 Gew. % Acrylsäureester, bevorzugt n-Butylacrylat, welche noch 1 bis 40 Gew. % Ethylen enthalten können. Die Vinylacetat-Ethylen Copolymere mit einem Ethylengehalt von 1 bis 60 Gew. % sind besonders bevorzugt.

Aus der Gruppe der (Meth)acrylsäureesterpolymere sind bevorzugt Copolymere aus den Monomereinheiten n-Butylacrylat und/oder 2-Ethylhexylacrylat; Copolymere von Methylmethacrylat mit n-Butylacrylat und/oder 2-Ethylhexylacrylat und Copolymere von Methylmethacrylat mit 1,3- Butadien.

Aus der Gruppe der Vinylhalogenid Copolymere sind neben den vorstehend genannten Vinylester-Ethylen-Vinylchlorid Copolymeren, Vinylchlorid-Ethylen Copolymere und Vinylchlorid-Acrylat Copolymere bevorzugt.

Aus der Gruppe der Vinylaromat Copolymere sind bevorzugt Styrol - Butadien Copolymere und Styrol - Acrylsäureester Copolymere wie Styrol- n-Butylacrylat oder Styrol - 2-Ethylhexylacrylat mit einem Styrolgehalt von jeweils 10 bis 70 Gew. %. Besonders bevorzugt sind Styrol - Butadien Copolymere und Styrol - Acrylsäureester Copolymere.

In einer weiteren Ausführungsform besonders bevorzugt sind Vinylacetat Polymere, Vinylacetat-Ethylen Copolymere mit einem Ethylengehalt von 1 bis 60 Gew. %, Vinylacetat Copolymere mit 1 bis 50 Gew. % eines oder mehrerer, weiterer Vinylestermonomere wie Vinyllaurat, Vinylpivalat und insbesondere Vinylversatate, wie beispielsweise VeoVa9®, VeoVa10® und VeoVa11®(Handelsnamen der Firma Shell), wobei diese Copolymere noch als weiteres Monomer 1 bis 40 Gew. % Ethylen enthalten können. Besonders bevorzugt sind auch Vinylacetat-Acrylsäureester-Copolymere mit 1 bis 60 Gew. % Acrylsäureester, bevorzugt n-Butylacrylat, welche noch 1 bis 40 Gew. % Ethylen enthalten können. Weiterhin sind besonders bevorzugt Styrol - Butadien Copolymere und Styrol - Acrylsäureester Copolymere, wie Styrol- n-Butylacrylat oder Styrol - 2-Ethylhexylacrylat mit einem Styrolgehalt von jeweils 10 bis 70 Gew. %.

Das redispergierbare Polymerpulver liegt insbesondere bevorzugt vor als Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

Gegebenenfalls können die (Co)polymere noch funktionelle Comonomereinheiten in einer Menge von 0,1 bis 10 Gew. %, bezogen auf das Gesamtgewicht des Polymerisats, enthalten. Diese funktionellen Comonomereinheiten können ausgewählt sein aus der Gruppe der Mono- oder Dicarbonsäuren, wie zum Beispiel (Meth)acrylsäure und/oder Maleinsäure; der Gruppe der ethylenisch ungesättigten Carbonsäureamide wie zum Beispiel (Meth)acrylamid; aus der Gruppe der ethylenisch ungesättigten Sulfonsäuren beziehungsweise deren Salzen, vorzugsweise Vinylsulfonsäure und/oder Styrolsulfonsäure; aus der Gruppe der mehrfach ethylenisch ungesättigten Comonomere, beispielsweise Divinyladipat, Triallylisocyanurat, Diallylmaleat und/oder Allylmethacrylat. Der Anteil (meth)acrylamidogruppenhaltiger Struktureinheiten in den redispergierbaren Polymerpulvern gemäß der allgemeinen Formel II beträgt bevorzugt kleiner als 25 Molprozent. Die (Co)polymerisation erfolgt nach in der Technik einschlägig bekannten Verfahren wie dem Emulsionspolymerisationsverfahren. Die erhaltenen Dispersionen können sowohl mit einem Emulgator stabilisiert werden, als auch mit einem Schutzkolloid wie zum Beispiel Polyvinylalkohol. Um die redispergierbaren Polymerpulver zu erhalten wird bevorzugt eine Trocknung vorgenommen, wobei die Trocknung durch übliche Verfahren wie Sprühtrocknung, Gefriertrocknung, Koagulation der Dispersion und anschließende Wirbelschichttrocknung erfolgen kann. Das bevorzugte Verfahren ist die Sprühtrocknung. Die redispergierbaren Polymerpulver haben leider die unerwünschte Eigenschaft bei der Anwendung in zementären Bindemittelsystemem abbindeverzögernd zu wirken.

Das Rheologieadditiv kann ausgewählt sein aus modifizierten Polysacchariden. Diese Gruppe von Zusatzmitteln dient neben der Einstellung von rheologischen Eigenschaften der entsprechenden Baustoffmischungen (beispielsweise der Viskosität und / oder der Thixotropie), aber auch zur Wasserrückhaltung. Thixotrope Eigenschaften sind beispielsweise bei Fliesenklebemörteln zur Verbesserung des Abrutschwiderstands bei gleichzeitig guter Korrigierbarkeit der Lage der Fliese notwendig. Eine gute Wasserrückhalteeigenschaft des zementären Bindemittelsystems (zum Beispiel bei Fugenfüllern und vor allem bei Fliesenklebern) ist insbesondere dann erforderlich, wenn stark Wasser saugende zu beschichtende Untergründe oder stark Wasser aufnehmende Fliesen vorliegen.

Bevorzugt als modifizierte Polysaccharide sind Celluloseether, beispielsweise Alkylcellulosen wie Methylcellulose, Ethylcellulose, Propylcellulose und Methylethylcellulose, Hydroxyalkylcellulosen wie zum Beispiel Hydroxyethylcellulose (HEC), Hydroxypropylcellulose (HPC) und Hydroxyethylhydroxypropylcellulose, Alkylhydroxyalkylcellulosen wie zum Beispiel Methylhydroxyethylcelluose (MHEC), Methylhydroxypropylcelluose (MHPC) und Propylhydroxypropylcellulose. Bevorzugt sind die Celluloseetherderivate Methylcellulose (MC), Hydroxypropylcellulose (HPC), Hydroxyethylcellulose (HEC) und Ethylhydroxyethylcellulose (EHEC), besonders bevorzugt sind Methylhydroxyethylcelluose (MHEC) und Methylhydroxypropylcelluose (MHPC). Die vorstehend genannten Celluloseetherderivate, welche jeweils durch eine entsprechende Alkylierung oder Alkoxylierung von Cellulose erhältlich sind, liegen bevorzugt als nichtionische Strukturen vor. Besonders bevorzugt sind Methylhydroxyethylcelluose (MHEC) und Methylhydroxypropylcelluose (MHPC).
Daneben kommen auch bevorzugt nichtionische Stärkeetherderivate zum Einsatz, wie zum Beispiel Hydroxypropylstärke, Hydroxyethylstärke und Methylhydroxypropylstärke. Bevorzugt ist die Hydroxypropylstärke. Die Stärkeetherderivate können entweder alleine, bevorzugt aber in Kombination mit einem oder mehreren der vorstehend genannten Celluloseetherderivate eingesetzt werden, besonders bevorzugt liegen sie zusammen mit Methylhydroxyethylcelluose (MHEC) und/oder Methylhydroxypropylcelluose (MHPC) vor.
Eine allerdings weniger bevorzugte Alternative zu den vorstehend genannten modifizierten Polysaccharidderivaten, insbesondere zu den Celluloseethern und Stärkeethern, sind mikrobiell erzeugte Polysaccharide wie Welan Gum und/oder Xanthane und natürlich vorkommende Polysaccharide wie zum Beispiel Alginate, Carrageenane und Galactomannane. Diese können aus entsprechenden Naturprodukten durch extraktive Verfahren gewonnen werden, wie beispielsweise im Falle der Alginate und Carrageenane aus Algen, im Falle der Galactomannane von Johannisbrotbaumkernen.
Der Begriff "modifiziertes Polysaccharid" umfasst als Art der Modifizierung bevorzugt eine Alkoxylierung des Polysaccharids, insbesondere bevorzugt eine Ethoxylierung und/oder eine Propoxylierung. Als weitere Art der Modifikation ist eine Methylierung möglich. Es ist auch möglich, dass eine Methylierung und eine Alkoxylierung des Polysaccharids erfolgt. Als Polysaccharid sind Cellulose und Amylose (Stärke) bevorzugt.

Bei der Herstellung der pulverförmigen Trockenmörteladditive dieser Erfindung wird pulverförmiges, das heißt im festen Aggregatzustand vorliegendes Rheologieadditiv (redispergierbare Polymerpulver oder Polysaccharidderivat) mit einer wasserhaltigen Suspension von Kalziumsilikathydrat in Kontakt gebracht. Beispielsweise kann ein Lödige Mischer zum Einsatz gebracht werden oder ein Wirbelbettrockner, der Wirbelbettrockner ist bevorzugt, da durch den Luftstrom Wasser entfernt werden kann.

Die Art des in Kontakt bringens ist nicht besonders limitiert, es ist beantragt dass das aus der Kalziumsilikathydratsuspension eingebrachte Wasser schnell aus dem System entfernt wird, beispielsweise durch Erwärmen und/oder durch Entfernen des Wassers im Luftstrom. Um eine problemlose Produktion der Pulver zu ermöglichen wird möglichst wenig Wasser durch die Kalziumsilikathydratsuspension eingebracht.

Bevorzugt ist ein Verfahren zur Herstellung des pulverförmigen Trockenmörteladditivs, dadurch gekennzeichnet, dass das pulverförmige Trockenmörteladditiv als mit Kalziumsilikathydrat beschichtetes redispergierbares Polymerpulver und / oder als mit Kalziumsilikathydrat beschichtetes modifiziertes Polysaccharid vorliegt.

Durch die beschriebene Vorgehensweise, nämlich das in Kontakt bringen einer festen Komponente (Rheologieadditiv) mit einer flüssigen Komponente (wässrige Kalziumsilikathydratsuspension), wird an einem festen Partikelchen (Rheologieadditiv ausgewählt aus redispergierbaren Polymerpulvern und / oder modifizierten Polysacchariden) eine Hülle aus festem Kalziumsilikathydrat abgeschieden, was einer Beschichtung entspricht.

Bevorzugt ist ein Verfahren zur Herstellung des pulverförmigen Trockenmörteladditivs, dadurch gekennzeichnet, dass die als Edukt eingesetzte wässrige Suspension von Kalziumsilikathydrat aus einer Kalziumkomponente und einer Silikatkomponente in Anwesenheit einer wässrigen Lösung eines anionische und/oder anionogene Gruppen umfassenden Polymers hergestellt wurde.

Das Calciumsilikathydrat (als Edukt zur Weiterverarbeitung) kann beispielsweise in Form einer wässrigen Suspension, bevorzugt in Gegenwart eines KammpolymerFließmittels hergestellt werden, siehe WO 2010/026155 A1, auf die in vollem Umfang Bezug genommen wird. Bevorzugt können die Suspensionen hergestellt werden nach einem Verfahren gemäß einem der Ansprüche 1 bis 14 oder 15 bis 38 der WO 2010/026155 A1. Üblicherweise wird dabei eine das Calciumsilikathydrat (C-S-H) in feindisperser Form enthaltende Suspension erhalten. Bevorzugt beträgt der Feststoffgehalt der erhaltenen Suspension von 5 bis 35 Gew.-%, besonders bevorzugt von 10 bis 30 Gew.-%, insbesondere bevorzugt von 15 bis 25 Gew.-%.

Bevorzugte anionische Gruppen des Polymers sind ausgewählt aus Sulphonaten, Carboxylaten, Phosphorsäureestern und/oder Phosphorsäureestersalzen. Dabei sind die Carboxylate und die Phosphorsäureester und/oder Phosphorsäureestersalze bevorzugt.

Anionogene Gruppen sind chemische Funktionalitäten, welche in der Lage sind anionische Gruppen durch eine chemische Reaktion zu erzeugen. Beispielsweise können durch eine Säure/Base Reaktion aus den anionogenen Carbonsäuregruppen, Phosphorsäureestergruppen, Phosphonsäureestergruppen und Sulphonsäuregruppen, die entsprechenden anionischen Gruppen freigesetzt werden. Wiederum sind als anionogene Gruppen Carbonsäuren und Phosphorsäureester bevorzugt. Bevorzugt als Phosphorsäureester bzw. Phosphorsäureestersalz sind die Phosphorsäuremonoester bzw. Phosphorsäuremonoestersalze. Neben den Monoestern können auch die entsprechenden Di-, und Triester der Phosphorsäure verwendet werden.
Als weitere anionogene Gruppen kommen auch Anhydride (z.B. Maleinsäureanhydrid) in Frage, die sich durch Hydrolyse in entsprechende Säuregruppen umwandeln können.

Bevorzugt ist das anionische Gruppen umfassende Polymer ein Dispergiermittel für anorganische, hydraulische Bindemittel, insbesondere für (Portland)zement. Das Molekulargewicht M_{w} der Polymere beträgt bevorzugt von 10.000 g/mol bis 120.000 g/mol, besonders bevorzugt von 20.000 g/mol bis 100.000 g/mol und insbesondere bevorzugt von 30.000 g/mol bis 90.000 g/mol. Die Polymere wurden durch Größenausschlusschromatographie bezüglich des Umsatzes und ihrer Molekulargewichte analysiert (Säulenkombination: OH-Pak SB-G, OH-Pak SB 804 HQ und OH-Pak SB 802.5 HQ von Shodex, Japan; Eluent: 80 vol % einer wässrigen Lösung von HCO₂NH₄ (0.05 mol/l) und 20 vol % Acetonitril; Injektionsvolumen 100 µl; Flussrate 0.5 ml/min). Lineare Poly(ethylenoxid) und Polyethyleneglykol Standards wurden zur Kalibrierung benutzt.

Beispielsweise sind als anionische Gruppen umfassende Polymere zu nennen: Lignosulphonate (LGS), beta-Naphthalinsulphonsäurekondensate (BNS), Melamin Formaldehyd Sulphonsäurekondensate (MFS), Polycarboxylatether (PCE), Polyphosphatether, Polykondensate basierend auf alkoxylierten Aromaten und eine Phosphatgruppe umfassenden Aromaten. Bevorzugt sind Polycarboxylatether (PCE), Polyphosphatether (PPE) und Polykondensate basierend auf alkoxylierten Aromaten und eine Phosphatgruppe umfassenden Aromaten. Insbesondere bevorzugt sind Polycarboxylatether (PCE) und Polyphosphatether (PPE), wobei Polycarboxylatether und Polyphosphatether durch die Anwesenheit eines Polymerrückgrats aus Kohlenstoffatomen und Polyetherseitenketten am Polymerrückgrat gekennzeichnet sind. Bei den PCEs ist die anionische Gruppe ein Carboxylat, beziehungsweise eine Gruppe, die Carboxylat freisetzen kann. Bei den PPEs ist die anionische Gruppe ein Phosphoräureestersalz oder eine Gruppe, die Phosphorsäureestersalze freisetzen kann, wie zum Beispiel Phosphorsäureester. Bevorzugt werden Polyphosphatether und Polycarboxylatether durch radikalische Polymerisation aus ungesättigten Monomeren mit einer polymerisierbaren Kohlenstoff-Kohlenstoff Doppelbindung hergestellt.

Bevorzugt ist das Verfahren dadurch gekennzeichnet, dass die anionischen und/oder anionogenen Gruppen im Polymer als eine oder mehrere der folgenden Struktureinheiten (Ia) bis (Id) vorliegen: 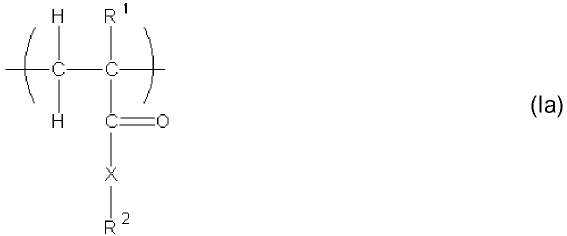 wobei
- R¹: jeweils unabhängig aus H, einer unverzweigten und/oder einer verzweigten C₁-C₄-Alkylgruppe ausgewählt ist,
- X: jeweils unabhängig aus einer Einfachbindung, -NH-(CₘH₂ₘ)- und/oder -O-(CₘH₂ₘ)- ausgewählt ist, wobei m eine ganze Zahl von 1 bis 4 ist,
- R²: jeweils unabhängig aus -OM_{1/q}, -SO₃M_{1/q}, -PO₃M_{2/q}, -O-PO₃M_{2/q}, -C₆H₄-SOM_{1/q}, -C₆H₄-PO₃M_{2/q} und/oder -C₆H₄-OPO₃M_{2/q} ausgewählt ist, wobei M aus H und/oder einem Kationäquivalent ausgewählt ist und q die Ladungszahl von M darstellt, mit der Maßgabe, dass R² durch -OM_{1/q} repräsentiert ist, falls X eine Einfachbindung ist; 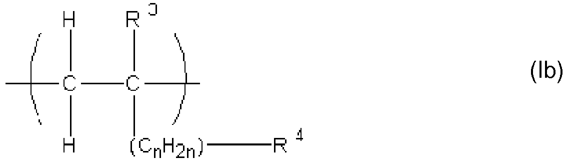
wobei
R³ die vorstehend für R¹ angegebene Bedeutung aufweist,
n eine ganze Zahl von 0 bis 4 ist,
R⁴ jeweils unabhängig aus -SO₃M_{1/q}, -PO₃M_{2/q}, -O-PO₃M_{2/q} und/oder -C₆H₄-SO₃M_{1/q} ausgewählt ist, wobei M und q die vorstehend genannten Bedeutungen aufweisen; 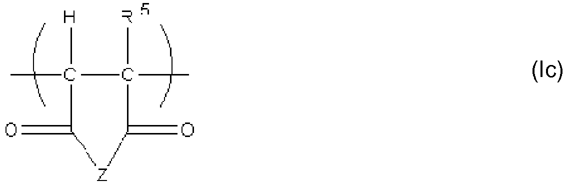
wobei
- R⁵: die vorstehend für R¹ angegebene Bedeutung aufweist,
- Z: jeweils unabhängig aus -O- und/oder -NH- ausgewählt ist; 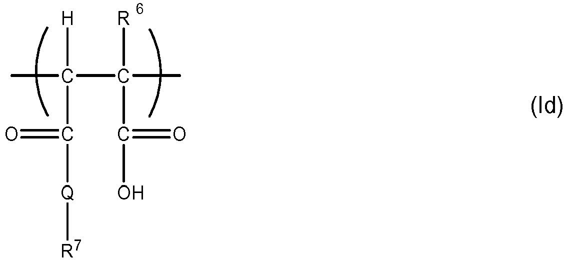
wobei
- R⁶: die vorstehend für R¹ angegebene Bedeutung aufweist,
- Q: die vorstehend für X angegebene Bedeutung aufweist,
- R⁷: die vorstehend für R² angegebene Bedeutung aufweist.

Bevorzugt weist das Polymer zumindest eine Struktureinheit der allgemeinen Formeln (Ia), (Ib), (Ic) und/oder (Id) auf, wobei die Struktureinheiten (Ia), (Ib), (Ic) und (Id) sowohl innerhalb einzelner Polymere, als auch zwischen verschiedenen Polymeren gleich oder verschieden sein können.

Bevorzugt ist ist das Kationäquivalent gleich oder verschieden und unabhängig voneinander ausgewählt aus Alkalimetallen, Erdalkalimetallen, Ammoniumsalzen, welche gegebenenfalls mit Kohlenwasserstoffgruppen substituiert sein können, Aluminium und/oder Metallen der ersten Übergangsreihe, besonders bevorzugt Fe²⁺ und/oder Fe³⁺.

Bevorzugt ist ein Verfahren, wobei die als Edukt eingesetzte wässrige Suspension von Kalziumsilikathydrat aus einer Kalziumkomponente und einer Silikatkomponente in Anwesenheit einer wässrigen Lösung eines anionische und/oder anionogene Gruppen umfassenden Polymers hergestellt wurde und das Polymer als anionische oder anionogene Gruppe mindestens eine Struktureinheit der Formel (Ia) aufweist, worin R¹ für H oder CH₃ steht; und/oder mindestens eine Struktureinheit der Formel (Ib), worin R³ für H oder CH₃ steht; und/oder mindestens eine Struktureinheit der Formel (Ic), worin R⁵ für H oder CH₃ steht und Z für O steht; und/oder mindestens eine Struktureinheit der Formel (Id), worin R⁶ für H steht und Q für O steht.

Bevorzugt ist ein Verfahren, wobei die als Edukt eingesetzte wässrige Suspension von Kalziumsilikathydrat aus einer Kalziumkomponente und einer Silikatkomponente in Anwesenheit einer wässrigen Lösung eines anionische und/oder anionogene Gruppen umfassenden Polymers hergestellt wurde und das Polymer als anionische oder anionogene Gruppe mindestens eine Struktureinheit der Formel (Ia) aufweist, worin R¹ für H oder CH₃ steht und XR² für OM oder X für O(CₙH₂ₙ) mit n = 1, 2, 3 oder 4, insbesondere 2, steht und R² für O-PO₃M₂ steht.

Besonders bevorzugt handelt es sich bei der Struktureinheit nach Formel la um eine Methacrylsäure- oder Acrylsäure-Einheit, bei der Struktureinheit nach Formel Ic um eine Maleinsäureanhydrid-Einheit und bei der Struktureinheit nach Formel Id um eine Maleinsäure- oder eine Maleinsäuremonoester-Einheit.

Soweit die Struktureinheiten (I) Phosphorsäureester oder Phosphonsäureester sind, können sie auch die entsprechenden Di- und Triester sowie den Monoester der Diphosphorsäure umfassen. Diese entstehen im allgemeinen bei der Veresterung von organischen Alkoholen mit Phosphorsäure, Polyphosphorsäure, Phosphoroxiden, Phosphorhalogeniden oder Phosphoroxyhalogeniden bzw. den entsprechenden Phosphonsäureverbindungen neben dem Monoester in unterschiedlichen Anteilen, beispielsweise 5-30 Mol-% Diester und 1-15 Mol-% Triester sowie 2-20 Mol-% des Monoesters der Diphosphorsäure.

Beispiele für bevorzugte Struktureinheiten (Ia) sind Struktureinheiten, die sich durch Polymerisation aus folgenden Monomeren (i) ableiten: (Meth)acrylsäure, Hydroxyethyl(meth)acrylsäurephosphorsäureester, Hydroxypropyl(meth)acrylsäure-phosphorsäureester.

Beispiele für Struktureinheiten (Ib) sind Struktureinheiten, die sich durch Polymerisation aus folgenden Monomeren (i) ableiten: Vinylsulphonsäure, Vinylphosphorsäure, Vinylphosphonsäure und Vinylstyrolsulphonsäure.

Beispiele für Struktureinheiten (Ic) sind Struktureinheiten, die sich durch Polymerisation aus folgenden Monomeren (i) ableiten: Maleinsäureanhydrid und Maleinsäureimid, bevorzugt Maleinsäureanhydrid.

Beispiele für Struktureinheiten (Id) sind Struktureinheiten, die sich durch Polymerisation aus folgenden Monomeren (i) ableiten: Maleinsäure, Amid und/oder Imid der Maleinsäure mit Diethanolamindisphosphat und Amid und/oder Imid der Maleinsäure mit Ethanolaminphosphat.

Bevorzugt ist die Polymerisation bei den Fällen (Ia) bis (Id) jeweils eine radikalische Polymerisation, besonders bevorzugt eine freie radikalische Polymerisation.

Bevorzugt ist ein Verfahren, dadurch gekennzeichnet, dass das anionische und/oder anionogene Gruppen umfassende Polymer Polyalkylenglykolstruktureinheiten enthält. Bevorzugt sind Alkylenglykole mit zwei bis 10 Kohlenstoffatomen, besonders bevorzugt zwei bis vier Kohlenstoffatomen. Bevorzugt sind die Polyalkylenglykolstruktureinheiten als Seitenketten an einem Polymerhauptstrang vorhanden. Bevorzugt sind Polyethylenglykolstruktureinheiten. Es können auch unabhängig voneinander verschiedene Alkylenglykolstruktureinheiten in dem Polyalkylenglykol vorliegen. Dies ist möglich in Blockform, in statistischer Verteilung, als Gradient oder in jeder beliebigen anderen Form. Bevorzugt ist der Anteil an Polyethylenglykol in den Polyalkylenglykolstruktureinheiten größer als 60 mol %, insbesondere bevorzugt größer als 80 mol %, am meisten bevorzugt größer als 90 mol %.

Die Polyalkylenglykolstruktureinheit leitet sich bevorzugt von Monomeren (ii) ab, die durch Einpolymerisation eingeführt werden und abgeleitet sind von C₁-C₄-Alkyl-polyethylenglykolacrylsäureester, Polyethylenglykolacrylsäureester, C₁-C₄-Alkyl-polyethylenglykolmethacrylsäureester, Polyethylenglykolmethacrylsäureester, C₁-C₄-Alkyl-polyethylenglykolacrylsäureester, Polyethylenglykolacrylsäureester, Vinyloxy-C₂-C₄-alkylen-polyethylenglykol, Vinyloxy-C₂-C₄-alkylen-polyethylenglykol-C₁-C₄-alkylether, Allyloxy- polyethylenglykol, Allyloxy-polyethylenglykol-C₁-C₄-alkylether, Methallyloxy-polyethylen-glykol, Methallyloxy-polyethylenglykol-C₁-C₄-alkylether, Isoprenyloxy-polyethylenglykol und/oder Isoprenyloxy-polyethylenglykol-C₁-C₄-alkylether.

Als anionische und/oder anionogene Gruppen umfassende Polymere, welche Polyalkylenglykolstruktureinheiten umfassen, sind bevorzugt Polycarboxylatether (PCE), Polyphosphatether (PPE) und Polykondensate basierend auf alkoxylierten Aromaten und eine Phosphatgruppe umfassenden Aromaten. Besonders bevorzugt sind Polycarboxylatether (PCE).

Polykondensate basierend auf alkoxylierten Aromaten und eine Phosphatgruppe umfassenden Aromaten werden unter sauren Bedingungen und bevorzugt unter Mitwirkung einer Ketonverbindung oder einer Aldehydverbindung hergestellt. Bevorzugt sind Aldehydverbindungen, insbesondere bevorzugt ist Formaldehyd.

In einer Ausführungsform ist das Polykondensat ein Polykondensationsprodukt, das die Struktureinheiten (III) und (IV) umfasst. 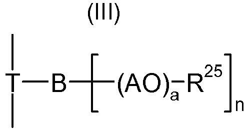 worin
T für einen substituierten oder unsubstituierten Phenyl- oder Naphthylrest oder einen substituierten oder unsubstituierten heteroaromatischen Rest mit 5 bis 10 Ringatomen, wovon 1 oder 2 Atome Heteroatome sind, die ausgewählt sind unter N, O und S, steht;
n für 1 oder 2 steht;
B für N, NH oder O steht, mit der Maßgabe, dass n für 2 steht, wenn B für N steht und der Maßgabe, dass n für 1 steht, wenn B für NH oder O steht;
A gleich oder verschieden ist und unabhängig voneinander für CₓH₂ₓ mit x = 2, 3, 4 oder 5 oder CH₂CH(C₆H₅) steht;
a für eine ganze Zahl von 1 bis 300 steht;
R²⁵ für H, einen verzweigten oder unverzweigten C₁- bis C₁₀-Alkylrest, C₅- bis C₈-Cycloalkylrest, Arylrest, oder Heteroarylrest mit 5 bis 10 Ringatomen, wovon 1 oder 2 Atome Heteroatome sind, die ausgewählt sind unter N, O und S, steht;
wobei die Struktureinheit (IV) ausgewählt ist unter den Struktureinheiten (IVa) und (IVb) 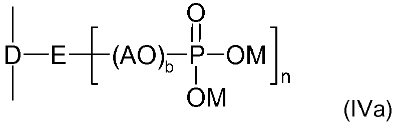 worin
D für einen substituierten oder unsubstituierten Phenyl oder Naphthylrest oder für einen substituierten oder unsubstituierten heteroaromatischen Rest mit 5 bis 10 Ringatomen, wovon 1 oder 2 Atome Heteroatome sind, die ausgewählt sind unter N, O und S, steht;
E für N, NH oder O steht, mit der Maßgabe, dass n für 2 steht, wenn E für N steht und der Maßgabe, dass n für 1 steht, wenn E für NH oder O steht;
A gleich oder verschieden ist und unabhängig voneinander für CₓH₂ₓ mit x = 2, 3, 4 oder 5 oder CH₂CH(C₆H₅) steht;
b für eine ganze Zahl von 1 bis 300 steht;
M unabhängig voneinander für H und/oder ein Kationäquivalent steht; und 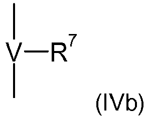
worin
V für einen substituierten oder unsubstituierten Phenyl- oder Naphthylrest steht, wobei V gegebenenfalls durch 1 oder zwei Reste substituiert ist, die unabhängig voneinander ausgewählt sind unter R⁸, OH, OR⁸, (CO)R⁸, COOM, COOR⁸, SO₃R⁸ und NO₂, vorzugsweise OH, ; OC₁-C₄-Alkyl und C₁-C₄-Alkyl;
R⁷ für COOM, OCH₂COOM, SO₃M oder OPO₃M₂ steht;
M für H und/oder ein Kationäquivalent steht; und
R⁸ für C₁-C₄-Alkyl, Phenyl, Naphthyl, Phenyl-C₁-C₄-alkyl oder C₁-C₄-Alkylphenyl steht.
Bevorzugt ist ist das Kationäquivalent gleich oder verschieden und unabhängig voneinander ausgewählt aus Alkalimetallen, Erdalkalimetallen, Ammoniumsalzen, welche gegebenenfalls mit Kohlenwasserstoffgruppen substituiert sein können, Aluminium und/oder Metallen der ersten Übergangsreihe, besonders bevorzugt Fe²⁺ und/oder Fe³⁺.

Die Struktureinheiten T und D in den allgemeinen Formeln (III) und (IV) des Polykondensationsprodukts sind vorzugsweise abgeleitet von Phenyl, 2-Hydroxyphenyl, 3-Hydroxyphenyl, 4-Hydroxyphenyl, 2-Methoxyphenyl, 3-Methoxyphenyl, 4-Methoxyphenyl, Naphthyl, 2-Hydroxynaphthyl, 4-Hydroxynaphthyl, 2-Methoxynaphthyl, 4-Methoxynaphthyl, Phenoxyessigsäure, Salicylsäure, vorzugsweise von Phenyl, wobei T und D unabhängig voneinander gewählt werden können und auch jeweils von einer Mischung der genannten Reste abgeleitet sein können. Die Gruppen B und E stehen unabhängig voneinander vorzugsweise für O. Alle Struktureinheiten A können sowohl innerhalb einzelner Polyetherseitenketten, als auch zwischen verschiedenen Polyetherseitenketten gleich oder verschieden sein. A steht in einer besonders bevorzugten Ausführungsform für C₂H₄.

In der allgemeinen Formel (III) steht a vorzugsweise für eine ganze Zahl von 3 bis 200 und insbesondere 5 bis 150, und in der allgemeinen Formel (IV) steht b vorzugsweise für eine ganze Zahl von 1 bis 300, insbesondere 1 bis 50 und besonders bevorzugt 1 bis 10. Weiterhin können die Reste der allgemeinen Formeln (III) oder (IV) unabhängig voneinander jeweils die gleiche Kettenlänge besitzen, wobei a und b jeweils durch eine Zahl repräsentiert wird. Es wird dabei in der Regel zweckmäßig sein, wenn jeweils Mischungen mit unterschiedlichen Kettenlängen vorliegen, so dass die Reste der Struktureinheiten im Polykondensationsprodukt für a und unabhängig für b unterschiedliche Zahlenwerte aufweisen.

Häufig weist das Polykondensationsprodukt ein gewichtsmittleres Molekulargewicht von 5.000 g/mol bis 200.000 g/mol, vorzugsweise 10.000 bis 100.000 g/mol und besonders bevorzugt 15.000 bis 55.000 g/mol auf.

Das Molverhältnis der Struktureinheiten (III):(IV) beträgt typischerweise 4:1 bis 1:15 und vorzugsweise 2:1 bis 1:10. Es ist vorteilhaft, über einen relativ hohen Anteil an Struktureinheiten (IV) im Polykondensationsprodukt zu verfügen, da eine verhältnismäßig hohe negative Ladung der Polymere einen guten Einfluss auf die Stabilität der wässrigen kolloid-dispersen Zubereitung hat. Das Molverhältnis der Struktureinheiten (IVa):(IVb), wenn beide enthalten sind, beträgt typischerweise 1:10 bis 10:1 und vorzugsweise 1:3 bis 3:1.

In einer bevorzugten Ausführungsform der Erfindung enthält das Polykondensationsprodukt eine weitere Struktureinheit (V), die durch die folgende Formel repräsentiert wird: 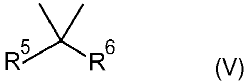 worin
- R⁵: für H, CH₃, COOH oder substituiertes oder unsubstituiertes Phenyl oder Naphthyl steht;
- R⁶: für H, CH₃, COOH oder substituiertes oder unsubstituiertes Phenyl oder Naphthyl steht.

Vorzugsweise stehen R₅ und R₆ für H oder einer der Reste R₅ und R₆ steht für H und der andere für CH₃.

Typischerweise sind R⁵ und R⁶ in Struktureinheit (V) gleich oder verschieden und stehen für H, COOH und/oder Methyl. Ganz besonders bevorzugt ist H.

In einer anderen Ausführungsform beträgt das Molverhältnis der Struktureinheiten [(III) + (IV)] : (V) im Polykondensat 2:1 bis 1:3.

Die Polykondensate werden typischerweise nach einem Verfahren hergestellt, bei dem man die Verbindungen miteinander umsetzt, die den Struktureinheiten (III), (IV) und (V) zugrunde liegen. Die Herstellung der Polykondensate ist beispielsweise beschrieben in WO 2006/042709 und WO 2010/026155.

Vorzugsweise ist das Monomer mit einer Ketogruppe ein Aldehyd oder Keton. Beispiele für Monomere der Formel (V) sind Formaldehyd, Acetaldehyd, Aceton, Glyoxylsäure und/oder Benzaldehyd. Formaldehyd ist bevorzugt.

Das erfindungsgemäße polymere Dispergiermittel kann auch in Form seiner Salze, wie beispielsweise des Natrium-, Kalium-, organischen Ammonium-, Ammonium- und/oder Calciumsalzes, vorzugsweise als Natrium- und/oder Calciumsalz, vorliegen.

Bevorzugt ist ein Verfahren dadurch gekennzeichnet, dass als Polyalkylenglykolstruktureinheit im anionische und/oder anionogene Gruppen umfassenden Polymer zumindest eine Struktureinheit der allgemeinen Formeln (IIa), (IIb), (IIc) und/oder (IId) umfasst ist: 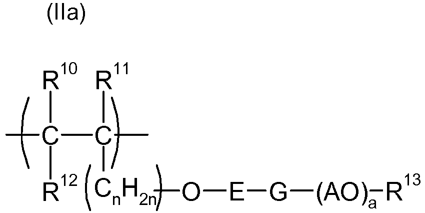 worin
R¹⁰, R¹¹ und R¹² unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
G für O, NH oder CO-NH steht; oder
E und G gemeinsam für eine chemische Bindung stehen;
A gleich oder verschieden ist und unabhängig voneinander für CₓH₂ₓ mit x = 2, 3, 4 oder 5 oder CH₂CH(C₆H₅) steht;
n für 0, 1, 2, 3, 4 und/oder 5 steht;
a für eine ganze Zahl von 2 bis 350 steht;
R¹³ für H, eine unverzweigte oder verzweigte C₁-C₄-Alkylgruppe, CO-NH₂ und/oder COCH₃ steht; 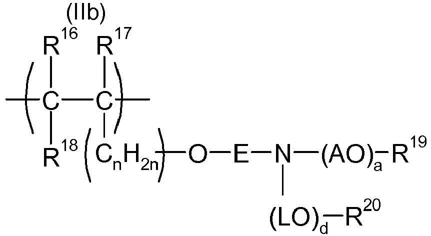
worin
R¹⁶, R¹⁷ und R¹⁸ unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
A gleich oder verschieden ist und unabhängig voneinander für CₓH₂ₓ mit x = 2, 3, 4 oder 5 oder CH₂CH(C₆H₅) steht;
L gleich oder verschieden ist und unabhängig voneinander für CₓH₂ₓ mit x = 2, 3, 4 oder 5 oder CH₂-CH(C₆H₅) steht;
a für eine ganze Zahl von 2 bis 350 steht;
d für eine ganze Zahl von 1 bis 350 steht;
R¹⁹ für H oder eine unverzweigte oder verzweigte C₁-C₄-Alkylgruppe steht;
R²⁰ für H oder eine unverzweigte C₁-C₄-Alkylgruppe steht; und
n für 0, 1, 2, 3, 4 oder 5 steht; 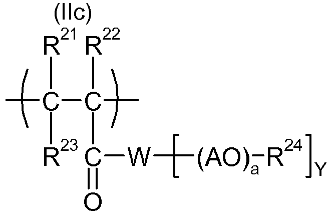
worin
R²¹, R²² und R²³ unabhängig voneinander für H oder eine unverzweigte oder verzweigte C₁-C₄-Alkylgruppe stehen;
W für O, NR²⁵, N steht
Y für 1 steht, wenn W = O oder NR²⁵, und für 2 steht, wenn W = N;
A gleich oder verschieden ist und unabhängig voneinander für CₓH₂ₓ mit x = 2, 3, 4 oder 5 oder CH₂CH(C₆H₅) steht;
a für eine ganze Zahl von 2 bis 350 steht;
R²⁴ für H oder eine unverzweigte oder verzweigte C₁-C₄-Alkylgruppe steht;
R²⁵ für H oder eine unverzweigte oder verzweigte C₁₋C₄-Alkylgruppe steht; 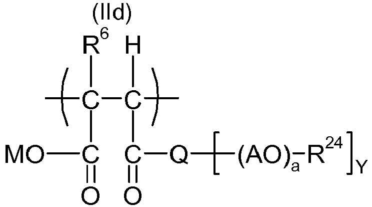
worin
- R⁶: für H oder eine unverzweigte oder verzweigte C₁-C₄-Alkylgruppe steht;
- Q: für NR¹⁰, N oder O steht;
- Y: für 1 steht, wenn Q = O oder NR¹⁰ und für 2 steht, wenn Q = N;
- R¹⁰: für H oder eine unverzweigte oder verzweigte C₁-C₄-Alkylgruppe steht;
- R²⁴: für H oder eine unverzweigte oder verzweigte C₁-C₄-Alkylgruppe steht;
- A: gleich oder verschieden ist und unabhängig voneinander für CₓH₂ₓ mit x = 2, 3, 4 oder 5, oder CH₂CH(C₆H₅) steht;
- M: für H und/oder ein Kationäquivalent steht; und
- a: für eine ganze Zahl von 2 bis 350 steht.

Bevorzugt ist ist das Kationäquivalent gleich oder verschieden und unabhängig voneinander ausgewählt aus Alkalimetallen, Erdalkalimetallen, Ammoniumsalzen, welche gegebenenfalls mit Kohlenwasserstoffgruppen substituiert sein können, Aluminium und/oder Metallen der ersten Übergangsreihe, besonders bevorzugt Fe²⁺ und/oder Fe³⁺.

Die Struktureinheiten (IIa) bis (IId) werden bevorzugt durch Einpolymerisation von Polyethermakromonomeren erzeugt. Als Polyethermakromonomer (ii) wird vorzugsweise alkoxyliertes Isoprenol und/oder alkoxylierter Hydroxybutylvinylether und/oder alkoxylierter (Meth)allylalkohol und/oder vinyliertes Methylpolyalkylenglykol, jeweils vorzugsweise mit einem arithmetischen Mittel von 4 bis 340 Oxyalkylengruppen, besonders bevorzugt 50 bis 120 Oxyalkylengruppen, eingesetzt.

Bevorzugt ist ein Verfahren, wobei das anionische und/oder anionogene Gruppen umfassende Polymer aufgebaut ist aus Struktureinheiten (I) und (II), die abgeleitet sind von den Monomeren
(i) Hydroxyethylacrylatphosphorsäureester und/oder Hydroxyethylmethacrylatphosphorsäureester und (ii) C₁-C₄-Alkyl-polyethylenglykolacrylsäureester und/oder C₁-C₄-Alkyl-polyethylenglykolmethacrylsäureester; oder
(i) Acrylsäure und/oder Methacrylsäure und (ii) C₁C₄-Alkyl-polyethylenglykolacrylsäureester und/oder C₁-C₄-Alkyl-polyethylenglykolmethacrylsäureester; oder
(i) Acrylsäure Methacrylsäure und/oder Maleinsäure und (ii) Vinyloxy-C₂-C₄-alkylen-polyethylenglykol, Allyloxy-polyethylenglykol, Methallyloxy-polyethylen-glykol und/oder Isoprenyloxy-polyethylenglykol.

Bevorzugt ist ein Verfahren, wobei das anionische und/oder anionogene Gruppen umfassende Polymer aufgebaut ist aus Struktureinheiten (I) und (II), die abgeleitet sind von den Monomeren
(i) Hydroxyethylmethacrylatphosphorsäureester und (ii) C₁-C₄-Alkyl-polyethylenglykolmethacrylsäureester oder Polyethylenglykolmethacrylsäureester; oder
(i) Methacrylsäure und (ii) C₁-C₄-Alkyl-polyethylenglykolmethacrylsäureester oder Polyethylenglykolmethacrylsäureester; oder
(i) Acrylsäure und Maleinsäure und (ii) Vinyloxy-C₂-C₄-alkylen-polyethylenglykol oder
(i) Acrylsäure und Maleinsäure und (ii) Isoprenyloxy-polyethylenglykol oder
(i) Acrylsäure und (ii) Vinyloxy-C₂-C₄-alkylen-polyethylenglykol oder
(i) Acrylsäure und (ii) Isoprenyloxy-polyethylenglykol oder
(i) Acrylsäure und (ii) Methallyloxy-polyethylenglykol oder
(i) Maleinsäure und (ii) Isoprenyloxy-polyethylenglykol oder
(i) Maleinsäure und (ii) Allyloxy-polyethylenglykol oder
(i) Maleinsäure und (ii) Methallyloxy-polyethylenglykol.

Das Molverhältnis der Struktureinheiten (I) : (II) beträgt bevorzugt von 1:4 bis 15:1, insbesondere bevorzugt von 1:1 bis 10:1.

Die Herstellung der polymeren Dispergiermittel, welche die Struktureinheiten (I) und (II) enthalten, erfolgt in üblicher Weise, beispielsweise durch radikalische Polymerisation. Sie ist z. B. beschrieben in EP0894811, EP1851256, EP2463314, EP0753488.

Bevorzugt ist ein Verfahren, dadurch gekennzeichnet, dass das Rheologieadditiv ein redispergierbares Polymerpulver ist und ausgewählt ist aus Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

Bevorzugt ist ein Verfahren, dadurch gekennzeichnet, dass das modifizierte Polysaccharid als Methylcellulose, Methylhydroxyethylcellulose, Methylhydroxypropylcellulose, Hydroxyethylcellulose, Hydroxypropylcellulose, Hydroxypropylstärke, Hydroxyethylstärke und/oder Methylhydroxypropylstärke vorliegt.

Bevorzugt ist ein Verfahren, dadurch gekennzeichnet, dass der Anteil des Kalziumsilikathydrats bezogen auf das oder die Rheologieadditiv(e) von 0.5 Gew. % bis 100 Gew. % beträgt. Bevorzugt beträgt der Anteil des Kalziumsilikathydrats bezogen auf das oder die Rheologieadditiv(e) von 1 Gew. % bis 50 Gew. %, besonders bevorzugt von 2 bis 25 Gew. %. Dabei wird die Masse des Kalziumsilikathydrats bezogen auf die Summe der Massen der Rheologieadditive gebildet, bei Anwesenheit von verschiedenen Typen von Rheologieadditiven (redispergierbare Polymerpulver und modifizierte Polysaccharide) werden diese entsprechend addiert. Die Masse des Kalziumsilikathydrats wird dabei berechnet als Gesamtmasse des eingesetzten Kalziumsilikathydrats aus der Kalziumsilikathydrat enthaltenden Suspension (Edukt) abzüglich des Wasseranteils, abzüglich eventueller organischer Komponenten aus der Kalziumsilikathydrat enthaltenden Suspension, insbesondere abzüglich der bei der Herstellung eingesetzten, anionische und/oder anionogene Gruppen umfassenden Polymere und abzüglich anorganischer Fremdionen, welche verschieden sind von Kalzium und Silikat (beispielsweise Natriumionen, Nitrationen oder andere Ionen, welche z.B. bei der Herstellung der Kalziumsilikathydrat enthaltenden Suspensionen mit eingebracht wurden).

Bei dem Verfahren, ist der Wasseranteil, der durch die Suspension von Kalziumsilikathydrat eingebracht wird kleiner als 30 Gew. %, besonders bevorzugt kleiner als 25 Gew. %, bezogen auf die Summe der Massen der Kalziumsilikathydratsuspension und des oder der Additive. Zu viel Wasser bewirkt, dass das Rheologieadditiv sich anlöst oder zumindest aufquillt. Es werden dann etwas weniger gute Eigenschaften erhalten.

Alternativ bei dem Verfahren, erfolgt das in Kontakt bringen des Rheologieadditivs oder der Rheologieadditive mit einer wässrigen Suspension von Kalziumsilikathydrat unter wasserentziehenden Bedingungen oder, werden nach dem in Kontakt bringen wasserentziehende Bedingungen eingestellt werden. Bevorzugt ist ein Verfahren, dadurch gekennzeichnet, dass das in Kontakt bringen unter wasserentziehenden Bedingungen in einem Wirbelbettmischer durchgeführt wird, bevorzugt bei Temperaturen von 15 °C bis 100 °C, besonders bevorzugt von 20 °C bis 80 °C und insbesondere bevorzugt von 30 °C bis 60 °C.

Die Rheologieadditive redispergierbare Polymerpulver und / oder modifizierte Polysaccharide weisen in hydraulisch abbindenden Bindemittelsystemen eine relativ starke Verzögerung des Abbindens auf. Im Gegensatz dazu ist es möglich diese Verzögerung des Abbindens bei Einsatz der erfindungsgemäßen Trockenmörteladditive vollkommen zu eliminieren oder weitgehend zu verringern. Die erfindungsgemäßen Produkte weisen damit neue, bislang im Stand der Technik nicht bekannte Vorteile auf und lösen das bislang im Stand der Technik nicht zufriedenstellend gelöste Problem der Verzögerung von Rheologieadditiven.

Bevorzugt enthält das erfindungsgemäß hergestellte Trockenmörteladditiv ein mit Kalziumsilikathydrat vergütetes Rheologieadditiv, welches im Vergleich zu den Rheologieadditiven ohne Kalziumsilikathydrat einen geringeren Verzögerungseffekt oder keinen Verzögerungseffekt bei der Anwendung in hydraulischen, bevorzugt zementären Bindemittelsystemen, aufweist.

### Beispiele

Im Folgenden soll die Abkürzung C-S-H für Kalziumsilikathydrat stehen. Unter Additiv soll das Rheologieadditiv als solches (nicht erfindungsgemäß) verstanden werden und unter C-S-H modifiziertem Additiv soll das erfindungsgemäße pulverförmige Trockenmörteladditiv verstanden werden.

### Herstellungsbeispiel Trockenmörteladditiv 1:

12.5 kg Mecellose 40 (U)S (Methylcellulose) wurden in einem Lödige Pflugscharmischer vorgelegt. Während das Material mit 188 U/min gemischt wurde, erfolgte bei Raumtemperatur innerhalb von 14 Minuten das Aufsprühen von 2.5 kg einer 21.5 %igen wässrigen Suspension von Kalziumsilikathydrat. Anschließend wurde 60 Sekunden nachgemischt. Die 21.5 % ige Kalziumsilikathydrat-Suspension wurde gemäß dem Beispiel 5 der Tabelle 2 der WO2010/026155 A1 hergestellt und wird in allen weiteren Beispielen verwandt, teilweise in verdünnter Form.

### Herstellungsbeispiel Trockenmörteladditiv 2:

20 kg Starvis SE 25 F Stärkeether (kationisch modifizierte Stärke) werden im Lödige Pflugscharmischer vorgelegt. Während das Material mit 188 U/min gemischt wurde, erfolgte bei Raumtemperatur innerhalb von 8 Minuten das Aufsprühen von 2.7 kg einer 21.5 %igen Lösung von Kalziumsilikathydrat in Wasser (WO 2010/026155 A1). Anschließend wurde 60 Sekunden nachgemischt.

### Herstellungsbeispiel Trockenmörteladditiv 3:

1 kg Mecellose 40 (U)S (Methylcellulose) werden in einem Wirbelbetttrockner vorgelegt und 3.2 kg einer 10.75 %igen Lösung von Kalziumsilikathydrat in Wasser (die 21.5 % ige Kalziumsilikathydrat-Suspension des Beispiels 5 der Tabelle 2 der WO2010/026155 A1 wurde entsprechend mit Wasser verdünnt) werden mit einer Zulufttemperatur von 55 °C innerhalb von 4 Stunden aufgesprüht.

### Herstellungsbeispiel Trockenmörteladditiv 4:

1.5 kg Dispersionspulver Vinnapas 7034 N (Terpolymer aus Vinylacetat, Vinylester und Ethylen) werden in einem Wirbelbetttrockner vorgelegt und 2.4 kg einer 10.75 %igen Lösung von Kalziumsilikathydrat in Wasser (die 21.5 % ige KalziumsilikathydratSuspension des Beispiels 5 der Tabelle 2 der WO2010/026155 A1 wurde entsprechend mit Wasser verdünnt) werden mit einer Zulufttemperatur von 55 °C innerhalb von 2.5 Stunden aufgesprüht.

Die Beispiele der Trockenmörteladditive 1 bis 4 sind in der Tabelle 1 zusammengefasst.

**Tabelle 1: Herstellungsbeispiele 1 bis 4**

| Beispiel | Additiv | Aufsprühtechnik | Menge C-S-H bezogen auf Additiv (Gew. %)* |
|---|---|---|---|
| 1 | Mecellose 40 (U)S | Lödige Mischer | 1,4 |
| 2 | Starvis SE 25 F | Lödige Mischer | 1,0 |
| 3 | Mecellose 40 (U)S | Wirbelbett | 11,6 |
| 4 | Vinnapas 7034 N | Wirbelbett | 5,6 |

| | | | |
|---|---|---|---|
| * Die Masse des Kalziumsilikathydrats wird dabei berechnet als Gesamtmasse des eingesetzten Kalziumsilikathydrats aus der Kalziumsilikathydrat enthaltenden Suspension (Edukt) abzüglich des Wasseranteils, abzüglich eventueller organischer Komponenten aus der Kalziumsilikathydrat enthaltenden Suspension, insbesondere abzüglich der bei der Herstellung eingesetzten, anionische und/oder anionogene Gruppen umfassenden Polymere und abzüglich anorganischer Fremdionen, welche verschieden sind von Kalzium und Silikat. | | | |

Anwendungstests: Kalorimetrische Untersuchung des Abbindeverhaltens von Normmörtel in Anwesenheit erfindungsgemäßer durch Kalziumsilikathydrat modifizierter Additive

### Vorbereitung der Mörtelmischungen für die Kalorimetrieexperimente:

754 g eines Compounds bestehend aus Zement, Kalksteinmehl und Sand (Tabelle 2) wurden trocken homogenisiert. Zu diesem Compound wurde die entsprechende Menge erfindungsgemäß mit Kalziumsilikathydrat modifiziertes (Trockenmörteladditive aus den Beispielen 1 bis 4), bzw. als Referenz nicht modifiziertes Additiv zugegeben und jeweils ebenfalls homogen eingemischt. In der Tabelle 2 ist auch die Mischung 9 angegeben, bei welcher zum Compound separat C-S-H Pulver und das Additiv Mecellose 40 (U)S zugegeben wurde. Auch ein Normmörtel (Sand, Zement und Anmachwasser) wurde jeweils als Referenz vorbereitet und dann kalorimetrisch vermessen (Tabelle 2). Die entsprechend einem WZ-Wert von 0.5 benötigte Menge Wasser wurde jeweils in einem Mischtopf (Rilemmischer) vorgelegt, der Trockenmörtel wurde vorsichtig in das Anmachwasser eingestreut und anschließend wurde für 60 Sekunden bei 140 U/min gemischt (Stufe 1) bei gleichzeitigem Start einer Stoppuhr. Während einer Mischpause von 0.5 Minuten wurde das Mischpaddel herausgenommen, der Rand und Boden des Mischtopfes von Rückständen befreit, um diese vollständig in die Mischung einzubringen. Nach dem Einbau des Mischpaddels wurde erneut bei Stufe 1 und 140 U/min für 60 Sekunden gemischt, so dass der komplette Mischvorgang nach 150 Sekunden beendet war.

**Tabelle 2: Mörtelmischungen für Kalorimetrie**

| Mischung (Nr.) | Quarzsand HS 5 (g) | Milke CEM 52,5 Premium (g) | Juraperle Ulmerweiss (g) | Anmachwasser (g) | Produkt aus Bsp. 1 (g) | Produkt aus Bsp. 2 (g) | Produkt aus Bsp. 3 (g) | Produkt aus Bsp. 4 (g) | Additiv (g) (Produktname) | C-S-H Pulver ⁴⁾ (g) |
|---|---|---|---|---|---|---|---|---|---|---|
| 1¹⁾ | 468,2 | 454,5 | 68,2 | 247,5 | 9,1 | - | - | - | - | - |
| 2¹⁾ | 468,2 | 454,5 | 68,2 | 247,5 | - | 9,1 | - | - | - | - |
| 3¹⁾ | 468,2 | 454,5 | 68,2 | 247,5 | - | - | 9,1 | - | - | - |
| 4¹⁾ | 468,2 | 454,5 | 68,2 | 247,5 | - | - | - | 9,1 | - | - |
| 5²⁾ | 470,4 | 454,5 | 68,2 | 247,5 | - | - | - | - | 6,9⁵⁾ | - |
| 6²⁾ | 470,4 | 454,5 | 68,2 | 247,5 | - | - | - | - | 6,9⁶⁾ | - |
| 7²⁾ | 470,4 | 454,5 | 68,2 | 247,5 | - | - | - | - | 6,9⁵⁾ | - |
| 8²⁾ | 470,4 | 454,5 | 68,2 | 247,5 | - | - | - | - | 6,9⁷⁾ | - |
| 9³⁾ | 469,9 | 454,5 | 68,2 | 247,5 | - | - | - | - | 6,9⁵⁾ | 0,5 |

| | | | | | | | | | | |
|---|---|---|---|---|---|---|---|---|---|---|
| ¹⁾ Erfindungsgemäße Mischungen (Normmörtel + C-S-H modifiziertes Additiv) ²⁾ Vergleich (Normmörtel + Additiv); ⁵⁾ Mecellose 40 (U)S, ⁶⁾ Starvis SE 25 F, ⁷⁾ Vinnapas 7034 N ³⁾ Vergleich (Normmörtel + Additiv Mecellose 40 (U)S + C-S-H Pulver). ⁴⁾ Das C-S-H Pulver wurde neben dem Additiv Mecellose 40 (U)S zum Normmörtel separat zugemischt. Als zu trocknendes Ausgangsmaterial für das C-S-H Pulver wurde zunächst eine C-S-H Suspension gemäß der WO 2010026155 A1 hergestellt, welche 5.4 Gew. % MVA2500 (Produkt der BASF Construction Polymers GmbH), Feststoffgehalt 45.4 Gew. %, enthält. Es ist 1.85 Gew. % CaO und 1.97 Gew. % SiO₂ enthalten. Die vorstehend gemachten Angaben in Gew. % beziehen sich jeweils auf die gesamte wässrige Suspension. Anschließend wurde die C-S-H-Suspension bei 200° C auf dem Walzentrockner getrocknet und so das C-S-H Pulver erhalten. | | | | | | | | | | |

Die angerührte Mörtelmischung wurde umgehend in das Probengefäß des Kalorimeters überführt.

Die Ergebnisse der kalorimetrischen Anwendungstests, der nach den Beispielen 1 bis 4 erhaltenen Produkte, sind in der Tabelle 3 zusammengefasst.

**Tabelle 3: Zeit [h] bei der der maximale Wärmeumsatz erreicht wird.**

| | Zeit [h] (Erfindungsgemäße Beispiele) | Zeit [h] (Vergleichsversuche) | | |
|---|---|---|---|---|
| C-S-H modif. Additiv stammt aus: | Normmörtel + C-S-H modif. Additiv | Normmörtel + Additiv | Normmörtel + Additiv + C-S-H Pulver | Normmörtel |
| Beispiel 1 Additiv ¹⁾ Lödige Mischer | 22.9 (Mischung 1) | 23.1 (Mischung 5) | - | 21.2 |
| Beispiel 2 Additiv ²⁾ Lödige Mischer | 21.8 (Mischung 2) | 23.8 (Mischung 6) | - | 21.7 |
| Beispiel 3 Additiv ¹⁾ Wirbelbett | 22.6 (Mischung 3) | 25.4 (Mischung 7) | 25.3 h (Mischung 9) | 20.8 |
| Beispiel 4 Additiv ³⁾ Wirbelbett | 16.8 (Mischung 4) | 24.3 (Mischung 8) | - | 21.8 |

| | | | | |
|---|---|---|---|---|
| ¹⁾ Mecellose 40 (U)S, ²⁾ Starvis SE 25 F, ³⁾ Vinnapas 7034 N | | | | |

In der Tabelle 3 wurden alle Dosierungen so gewählt, dass jeweils 2 Gew. % Additiv (Mecellose 40 (U)S, Starvis SE 25 F, bzw. Vinnapas 7034 N) zum Einsatz kamen.

Die Ergebnisse der Tabelle 3 zeigen, dass die erfindungsgemäßen Beispiele gegenüber den entsprechenden Vergleichsbeispielen (Normmörtel + Additiv) den maximalen Wärmeumsatz schneller erreichen. Es erfolgt also ein schnelleres Abbinden des Bindemittels. Im Vergleich zum Normmörtel werden teils vergleichbare Ergebnisse (Bsp. 2), teils bessere Ergebnisse (Bsp. 4) erzielt. Bei den Beispielen 1 und 3 ist das Erreichen des maximalen Wärmeflusses gegenüber dem Normmörtel später. Diese Ergebnisse zeigen die Wirksamkeit der erfindungsgemäßen C-S-H modifizierten Additive um den unerwünschten Verzögerungseffekt der Additive aufzuheben oder zu verringern.

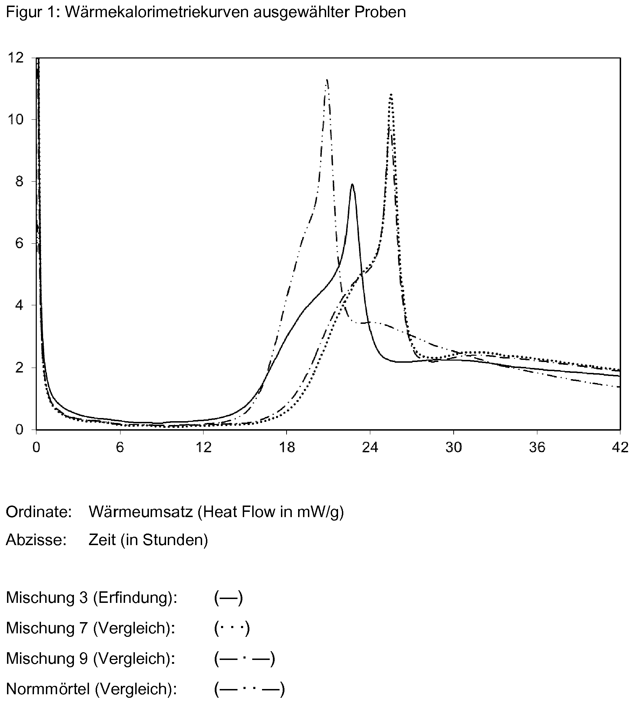

Zur graphischen Verdeutlichung der experimentellen Ergebnisse im kalorimetrischen Anwendungstest wurden vier Beispiele ausgewählt, nämlich die Mischungen 3, 7, 9 und der entsprechende Normmörtel. Man vergleiche mit der Tabelle 2 und der Tabelle 3 (vorletzte Zeile). Die entsprechenden Wärmeflusskurven sind in der Figur 1 abgebildet.

Figur 1: Wärmekalorimetrie ausgewählter Proben

Die Figur 1 zeigt, dass die Referenz Normmörtel die schnellste Wärmeentwicklung im Kalorimetrietest aufweist, allerdings ist die erfindungsgemäße Mischung 3 gegenüber dem Normmörtel nur leicht zeitlich verschoben, während die nicht erfindungsgemäßen Mischungen 7 und 9 relativ stark verspätete Wärmeentwicklungen zeigen. Interessant ist dabei, dass die Mischung 9, welche ja auch den Beschleuniger C-S-H in nicht auf das Additiv Mecellose 40 (U)S aufgebrachter Form) enthält, keinen guten Effekt im Vergleich zur erfindungsgemäßen Mischung 3 hat, sondern sich fast so verhält wie die Mischung 7 (Mecellose 40(U)S ohne C-S-H).

## Patentansprüche

1. Verfahren zur Herstellung eines pulverförmigen Trockenmörteladditivs, welches Kalziumsilikathydrat und eines oder mehrere Rheologieadditive ausgewählt aus redispergierbaren Polymerpulvern und/oder modifizierten Polysacchariden enthält, **dadurch gekennzeichnet, dass** das oder die Rheologieadditive in pulverförmiger Form mit einer wässrigen Suspension von Kalziumsilikathydrat in Kontakt gebracht wird und wobei der Wasseranteil, der durch die Suspension von Kalziumsilikathydrat eingebracht wird, kleiner als 30 Gew. %, bezogen auf die Summe der Massen der Kalziumsilikathydratsuspension und des oder der Rheologieadditive ist.

2. Verfahren zur Herstellung eines pulverförmigen Trockenmörteladditivs, welches Kalziumsilikathydrat und eines oder mehrere Rheologieadditive ausgewählt aus redispergierbaren Polymerpulvern und/oder modifizierten Polysacchariden enthält, **dadurch gekennzeichnet, dass** das oder die Rheologieadditive in pulverförmiger Form mit einer wässrigen Suspension von Kalziumsilikathydrat in Kontakt gebracht wird und das in Kontakt bringen unter wasserentziehenden Bedingungen erfolgt oder, dass nach dem in Kontakt bringen wasserentziehende Bedingungen eingestellt werden.

3. Verfahren nach Anspruch 1 oder 2, **dadurch gekennzeichnet, dass** das pulverförmige Trockenmörteladditiv als mit Kalziumsilikathydrat beschichtetes redispergierbares Polymerpulver und/oder als mit Kalziumsilikathydrat beschichtetes modifiziertes Polysaccharid vorliegt.

4. Verfahren nach einem der Ansprüche 1 bis 3, **dadurch gekennzeichnet, dass** die als Edukt eingesetzte wässrige Suspension von Kalziumsilikathydrat aus einer Kalziumkomponente und einer Silikatkomponente in Anwesenheit einer wässrigen Lösung eines anionische und/oder anionogene Gruppen umfassenden Polymers hergestellt wurde.

5. Verfahren nach Anspruch 4, **dadurch gekennzeichnet, dass** die anionischen und/oder anionogenen Gruppen im Polymer als eine oder mehrere der folgenden Struktureinheiten (Ia) bis (Id) vorliegen: 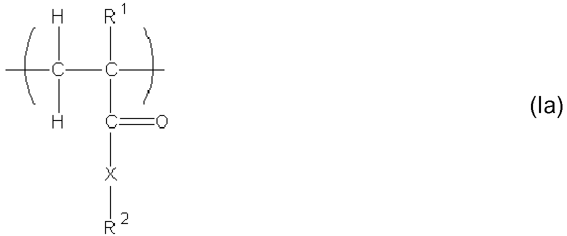 wobei
R¹ jeweils unabhängig aus H, einer unverzweigten und/oder einer verzweigten C₁-C₄-Alkylgruppe ausgewählt ist,
X jeweils unabhängig aus einer Einfachbindung, -NH-(CₘH₂ₘ)- und/oder -O-(CₘH₂ₘ)- ausgewählt ist, wobei m eine ganze Zahl von 1 bis 4 ist,
R² jeweils unabhängig aus -OM_{1/q}, -SO₃M_{1/q}, -PO₃M_{2/q}, -O-PO₃M_{2/q}, -C₆H₄-SO₃M_{1/q}, -C₆H₄-PO₃M_{2/q} und/oder -C₆H₄-OPO₃M_{2/q} ausgewählt ist, wobei M aus H, Alkalimetallen, Erdalkalimetallen, Aluminium und/oder Metallen der ersten Übergangsreihe ausgewählt ist und q die Ladungszahl von M darstellt, mit der Maßgabe, dass R² durch -OM_{1/q} repräsentiert ist, falls X eine Einfachbindung ist; 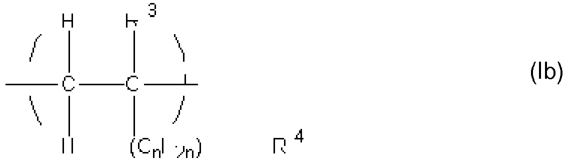
wobei
R³ die vorstehend für R¹ angegebene Bedeutung aufweist,
n eine ganze Zahl von 0 bis 4 ist,
R⁴ jeweils unabhängig aus -SO₃M_{1/q}, -PO₃M_{2/q}, -O-PO₃M_{2/q} und/oder -C₆H₄-SO₃M_{1/q} ausgewählt ist, wobei M und q die vorstehend genannten Bedeutungen aufweisen; 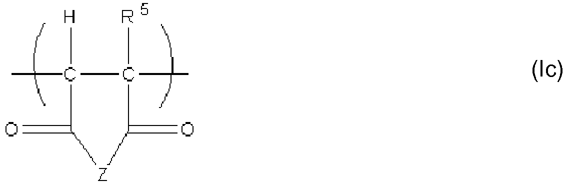
wobei
R⁵ die vorstehend für R¹ angegebene Bedeutung aufweist,
Z jeweils unabhängig aus -O- und/oder -NH- ausgewählt ist; 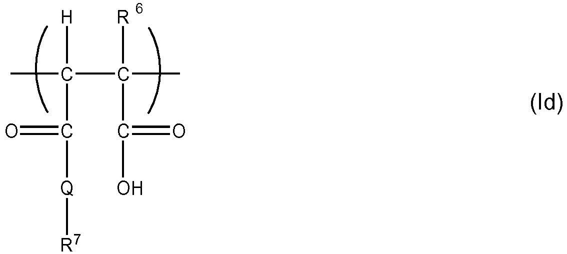
wobei
R⁶ die vorstehend für R¹ angegebene Bedeutung aufweist,
Q die vorstehend für X angegebene Bedeutung aufweist,
R⁷ die vorstehend für R² angegebene Bedeutung aufweist.

6. Verfahren nach einem der Ansprüche 4 oder 5, **dadurch gekennzeichnet, dass** das anionische und/oder anionogene Gruppen umfassende Polymer Polyalkylenglykolstruktureinheiten enthält.

7. Verfahren nach Anspruch 6, **dadurch gekennzeichnet, dass** als Polyalkylenglykolstruktureinheit zumindest eine Struktureinheit der allgemeinen Formeln (IIa), (IIb), (IIc) und/oder (IId) umfasst ist: 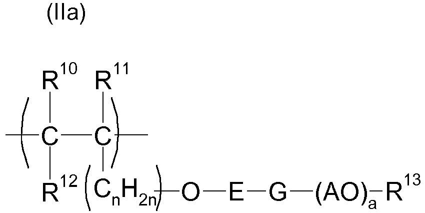 worin
R¹⁰, R¹¹ und R¹² unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht;
G für O, NH oder CO-NH steht; oder
E und G gemeinsam für eine chemische Bindung stehen;
A gleich oder verschieden ist und unabhängig voneinander für CₓH₂ₓ mit x = 2, 3, 4 oder 5 oder CH₂CH(C₆H₅) steht;
n für 0, 1, 2, 3, 4 und/oder 5 steht;
a für eine ganze Zahl von 2 bis 350 steht;
R¹³ für H, eine unverzweigte oder verzweigte C₁-C₄-Alkylgruppe, CO-NH₂ und/oder COCH₃ steht; 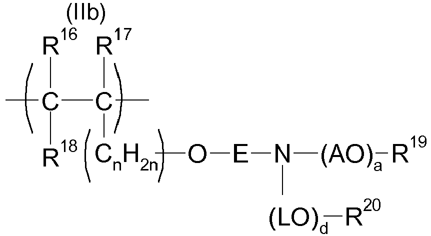
worin
R¹⁶, R¹⁷ und R¹⁸ unabhängig voneinander für H oder eine unverzweigte oder verzweigte C₁-C₄-Alkylgruppe stehen;
E für eine unverzweigte oder verzweigte C₁-C₆-Alkylengruppe, eine Cyclohexylengruppe, CH₂-C₆H₁₀, 1,2-Phenylen, 1,3-Phenylen, oder 1,4-Phenylen steht oder für eine chemische Bindung steht;
A gleich oder verschieden ist und unabhängig voneinander für CₓH₂ₓ mit x = 2, 3, 4 oder 5 oder CH₂CH(C₆H₅) steht;
L gleich oder verschieden ist und unabhängig voneinander für CₓH₂ₓ mit x = 2, 3, 4 oder 5 oder CH₂-CH(C₆H₅) steht;
a für eine ganze Zahl von 2 bis 350 steht;
d für eine ganze Zahl von 1 bis 350 steht;
R¹⁹ für H oder eine unverzweigte oder verzweigte C₁-C₄-Alkylgruppe steht;
R²⁰ für H oder eine unverzweigte C₁-C₄-Alkylgruppe steht; und
n für 0, 1, 2, 3, 4 oder 5 steht; 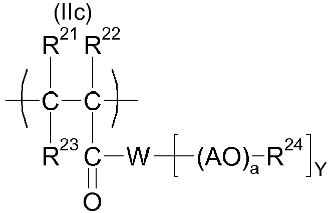
worin
R²¹, R²² und R²³ unabhängig voneinander für H oder eine unverzweigte oder verzweigte C₁-C₄-Alkylgruppe stehen;
W für O, NR²⁵, N steht
Y für 1 steht, wenn W = O oder NR²⁵, und für 2 steht, wenn W = N;
A gleich oder verschieden ist und unabhängig voneinander für CₓH₂ₓ mit x = 2, 3, 4 oder 5 oder CH₂CH(C₆H₅) steht;
a für eine ganze Zahl von 2 bis 350 steht;
R²⁴ für H oder eine unverzweigte oder verzweigte C₁-C₄-Alkylgruppe steht;
R²⁵ für H oder eine unverzweigte oder verzweigte C₁-C₄-Alkylgruppe steht; 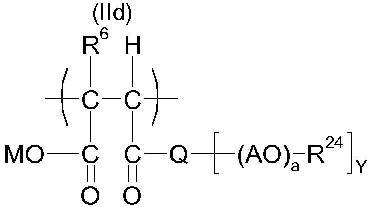
worin
R⁶ für H oder eine unverzweigte oder verzweigte C₁-C₄-Alkylgruppe steht;
Q für NR¹⁰, N oder O steht;
Y für 1 steht, wenn Q = O oder NR¹⁰ und für 2 steht, wenn Q = N;
R¹⁰ für H oder eine unverzweigte oder verzweigte C₁-C₄-Alkylgruppe steht;
R²⁴ für H oder eine unverzweigte oder verzweigte C₁-C₄-Alkylgruppe steht;
A gleich oder verschieden ist und unabhängig voneinander für CₓH₂ₓ mit x = 2, 3, 4 oder 5, oder CH₂CH(C₆H₅) steht;
M für H und/oder ein Kationäquivalent steht; und
a für eine ganze Zahl von 2 bis 350 steht.

8. Verfahren nach einem der Ansprüche 1 bis 7, **dadurch gekennzeichnet, dass** das Rheologieadditiv ein redispergierbares Polymerpulver ist und ausgewählt ist aus Vinylacetat Polymer, Vinylacetat-Ethylen Copolymer, Vinylacetat-Vinylester Copolymer und/oder Vinylacetat-Vinylester-Ethylen Copolymer, wobei jeweils die Vinylestermonomere ausgewählt sind aus der Gruppe Vinyllaurat, Vinylpivalat und Vinylversatate, weiterhin als Vinylacetat-Acrylsäureester-Copolymer, Vinylacetat-Acrylsäureester-Ethylen Copolymer, Styrol-Butadien Copolymer und Styrol-Acrylsäureester Copolymer, wobei jeweils die Acrylsäureester Ester mit verzweigten oder unverzweigten Alkoholen mit 1 bis 10 C-Atomen darstellen.

9. Verfahren nach einem der Ansprüche 1 bis 7, **dadurch gekennzeichnet, dass** das modifizierte Polysaccharid als Methylcellulose, Methylhydroxyethylcellulose, Methylhydroxypropylcellulose, Hydroxyethylcellulose, Hydroxypropylcellulose, Hydroxypropylstärke, Hydroxyethylstärke und/oder Methylhydroxypropylstärke vorliegt.

10. Verfahren nach einem der Ansprüche 1 bis 9, **dadurch gekennzeichnet, dass** der Anteil des Kalziumsilikathydrats bezogen auf das oder die Rheologieadditiv(e) von 0.5 Gew. % bis 100 Gew. % beträgt.

11. Verfahren nach einem der Ansprüche 2 bis 10, **dadurch gekennzeichnet, dass** das in Kontakt bringen unter wasserentziehenden Bedingungen in einem Wirbelbettmischer durchgeführt wird, bevorzugt bei Temperaturen von 15 °C bis 100 °C, besonders bevorzugt von 20 °C bis 80 °C und insbesondere bevorzugt von 30 °C bis 60 °C.

## Claims

1. Method for producing a pulverulent dry mortar additive which comprises calcium silicate hydrate and one or more rheological additives selected from redispersible polymer powders and/or modified polysaccharides, **characterized in that** the rheological additive or additives in pulverulent form are contacted with an aqueous suspension of calcium silicate hydrate and wherein the water fraction introduced by the suspension of calcium silicate hydrate is less than 30 wt%, based on the sum of the masses of the calcium silicate hydrate suspension and of the rheological additive or additives.

2. Method for producing a pulverulent dry mortar additive which comprises calcium silicate hydrate and one or more rheological additives selected from redispersible polymer powders and/or modified polysaccharides, **characterized in that** the rheological additive or additives in pulverulent form are contacted with an aqueous suspension of calcium silicate hydrate and the contacting takes place under water-removing conditions or **in that** water-removing conditions are established after the contacting.

3. Method according to Claim 1 or 2, **characterized in that** the pulverulent dry mortar additive takes the form of redispersible polymer powder coated with calcium silicate hydrate and/or of modified polysaccharide coated with calcium silicate hydrate.

4. Method according to any of Claims 1 to 3, **characterized in that** the aqueous suspension of calcium silicate hydrate used as starting material has been prepared from a calcium component and a silicate component in the presence of an aqueous solution of a polymer comprising anionic and/or anionogenic groups.

5. Method according to Claim 4, **characterized in that** the anionic and/or anionogenic groups in the polymer take the form of one or more of the following structural units (Ia) to (Id): 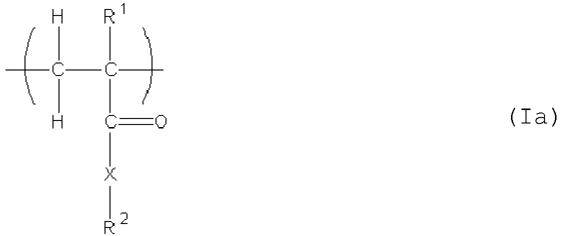 where
R¹ is selected in each case independently from H or an unbranched and/or branched C₁-C₄-alkyl group,
X is selected in each case independently from a single bond, -NH- (CₘH₂ₘ) - and/or -O- (CₘH₂ₘ) -, where m is an integer from 1 to 4,
R² is selected in each case independently from -OM_{1/q}, -SO₃M_{1/q}, -PO₃M_{2/q}, -O-PO₃M_{2/q}, -C₆H₄-SO₃M_{1/q,} -C₆H₄-PO₃M_{2/q} and/or -C₆H₄-OPO₃M_{2/q}, where M is selected from H, alkali metals, alkaline earth metals, aluminum and/or metals from the first transition series, and q represents the charge number of M, with the proviso that R² is represented by -OM_{1/q} if X is a single bond; 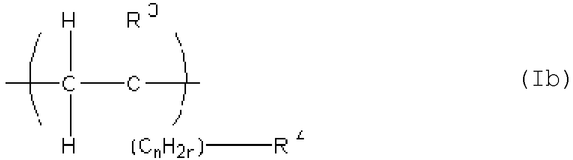
where
R³ has the definition give above for R¹,
n is an integer from 0 to 4,
R⁴ is selected in each case independently from -SO₃M_{1/q}, -PO₃M_{2/q}, -O-PO₃M_{2/q} and/or -C₆H₄-SO₃M_{1/q}, where M and q have the definitions given above; 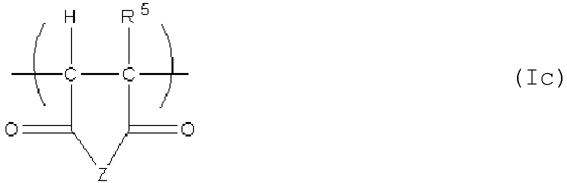
where
R⁵ has the definition given for R¹,
Z is selected in each case independently from -O- and/or -NH-; 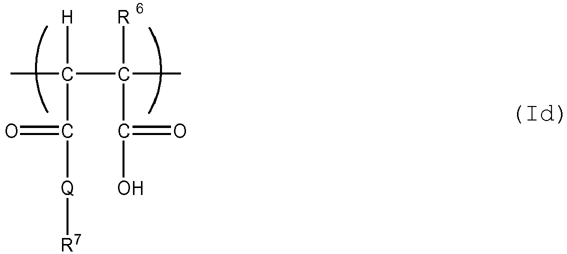
where
R⁶ has the definition given above for R¹,
Q has the definition given above for X, and
R⁷ has the definition given above for R².

6. Method according to either of Claims 4 and 5, **characterized in that** the polymer comprising anionic and/or anionogenic groups comprises polyalkylene glycol structural units.

7. Method according to Claim 6, **characterized in that** polyalkylene glycol structural unit comprises at least one structural unit of the general formulae (IIa), (IIb), (IIc) and/or (IId): 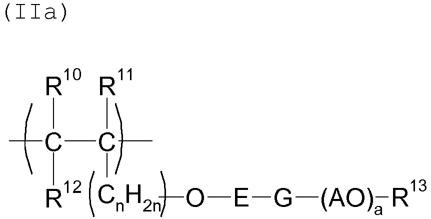 in which
R¹⁰, R¹¹ and R¹² independently of one another are H or an unbranched or branched C₁-C₄-alkyl group;
E is an unbranched or branched C₁-C₆-alkylene group, a cyclohexylene group, CH₂-C₆H₁₀, 1,2-phenylene, 1,3-phenylene, or 1,4-phenylene;
G is O, NH or CO-NH; or
E and G together are a chemical bond;
A is identical or different and independently at each occurrence is CₓH₂ₓ with x = 2, 3, 4, or 5, or is CH₂CH(C₆H₅);
n is 0, 1, 2, 3, 4 and/or 5;
a is an integer from 2 to 350;
R¹³ is H, an unbranched or branched C₁-C₄-alkyl group, CO-NH₂ and/or COCH₃; 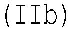 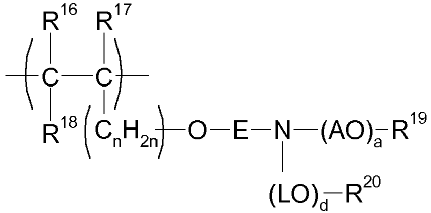
in which
R¹⁶, R¹⁷, and R¹⁸ independently of one another are H or an unbranched or branched C₁-C₄-alkyl group;
E is an unbranched or branched C₁-C₆-alkylene group, a cyclohexylene group, CH₂-C₆H₁₀, 1,2-phenylene, 1,3-phenylene, or 1,4-phenylene, or is a chemical bond;
A is identical or different and independently at each occurrence is CₓH₂ₓ with x = 2, 3, 4, or 5, or is CH₂CH(C₆H₅);
L is identical or different and independently at each occurrence is CₓH₂ₓ with x = 2, 3, 4, or 5, or is CH₂CH(C₆H₅);
a is an integer from 2 to 350;
d is an integer from 1 to 350;
R¹⁹ is H or an unbranched or branched C₁-C₄-alkyl group;
R²⁰ is H or an unbranched C₁-C₄-alkyl group; and
n is 0, 1, 2, 3, 4, or 5; 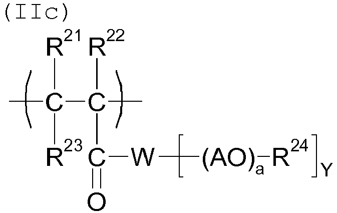
in which
R²¹, R²², and R²³ independently of one another are H or an unbranched or branched C₁-C₄-alkyl group;
W is O, NR²⁵, or N;
Y is 1 if W = O or NR²⁵, and is 2 if W = N;
A is identical or different and independently at each occurrence is CₓH₂ₓ with x = 2, 3, 4, or 5, or is CH₂CH(C₆H₅);
a is an integer from 2 to 350;
R²⁴ is H or an unbranched or branched C₁-C₄-alkyl group;
R²⁵ is H or an unbranched or branched C₁-C₄-alkyl group; 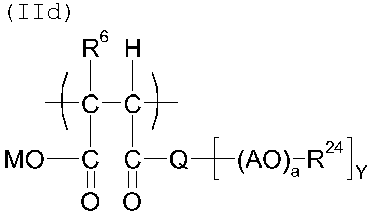
in which
R⁶ is H or an unbranched or branched C₁-C₄-alkyl group;
Q is NR¹⁰, N, or O;
Y is 1 if Q = O or NR¹⁰, and is 2 if Q = N;
R¹⁰ is H or an unbranched or branched C₁-C₄-alkyl group;
R²⁴ is H or an unbranched or branched C₁-C₄-alkyl group;
A is identical or different and independently at each occurrence is CₓH₂ₓ with x = 2, 3, 4, or 5, or is CH₂CH(C₆H₅);
M is H and/or one cation equivalent; and
a is an integer from 2 to 350.

8. Method according to any of Claims 1 to 7, **characterized in that** the rheological additive is a redispersible polymer powder and is selected from vinyl acetate polymer, vinyl acetate-ethylene copolymer, vinyl acetate-vinyl ester copolymer and/or vinyl acetate-vinyl ester-ethylene copolymer, the vinyl ester monomers being selected in each case from the group of vinyl laurate, vinyl pivalate, and vinyl versatates, and additionally in the form of vinyl acetate-acrylic ester copolymer, vinyl acetate-acrylic ester-ethylene copolymer, styrene-butadiene copolymer, and styrene-acrylic ester copolymer, the acrylic esters in each case being esters with branched or unbranched alcohols having 1 to 10 C atoms.

9. Method according to any of Claims 1 to 7, **characterized in that** the modified polysaccharide takes the form of methylcellulose, methylhydroxyethylcellulose, methylhydroxypropylcellulose, hydroxyethylcellulose, hydroxypropylcellulose, hydroxypropyl starch, hydroxyethyl starch and/or methylhydroxypropyl starch.

10. Method according to any of Claims 1 to 9, **characterized in that** the fraction of the calcium silicate hydrate, based on the rheological additive or additives, is from 0.5 wt% to 100 wt%.

11. Method according to any of Claims 2 to 10, **characterized in that** the contacting is carried out under water-removing conditions in a fluidized-bed mixer, preferably at temperatures of 15°C to 100°C, more preferably of 20°C to 80°C, and especially preferably of 30°C to 60°C.

## Revendications

1. Procédé pour la préparation d'un additif sous forme de poudre pour mortier sec, qui contient un silicate de calcium hydraté et un ou plusieurs additifs rhéologiques choisis parmi les poudres polymères redispersibles et/ou les polysaccharides modifiés, **caractérisé en ce que** ledit un ou lesdits plusieurs additifs rhéologiques sous forme de poudre est/sont mis en contact avec une suspension aqueuse de silicate de calcium hydraté et la proportion d'eau qui est introduite par la suspension de silicate de calcium hydraté étant inférieure à 30% en poids, par rapport à la somme des masses de la suspension de silicate de calcium hydraté et dudit un ou desdits plusieurs additifs rhéologiques.

2. Procédé pour la préparation d'un additif sous forme de poudre pour mortier sec, qui contient un silicate de calcium hydraté et un ou plusieurs additifs rhéologiques choisis parmi les poudres polymères redispersibles et/ou les polysaccharides modifiés, **caractérisé en ce que** ledit un ou lesdits additifs rhéologiques sous forme de poudre est/sont mis en contact avec une suspension aqueuse de silicate de calcium hydraté et la mise en contact a lieu dans des conditions déshydratantes ou **en ce que** des conditions déshydratantes sont réglées après la mise en contact.

3. Procédé selon la revendication 1 ou 2, **caractérisé en ce que** l'additif sous forme de poudre pour mortier sec se trouve sous forme d'une poudre polymère redispersible revêtue par du silicate de calcium hydraté et/ou sous forme de polysaccharide modifié revêtu par du silicate de calcium hydraté.

4. Procédé selon l'une quelconque des revendications 1 à 3, **caractérisé en ce que** la suspension aqueuse de silicate de calcium hydraté, utilisée comme produit de départ, a été préparée à partir d'un composant à base de calcium et d'un composant à base de silicate en présence d'une solution aqueuse d'un polymère comprenant des groupes anioniques et/ou anionogènes.

5. Procédé selon la revendication 4, **caractérisé en ce que** les groupes anioniques et/ou anionogènes dans le polymère se trouvent sous forme d'un ou de plusieurs des motifs structuraux suivants (Ia) à (Id) : 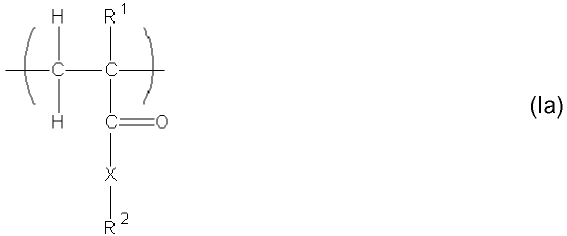 dans laquelle
R¹ est choisi, à chaque fois indépendamment, parmi H, un groupe C₁-C₄-alkyle non ramifié et/ou ramifié,
X est choisi, à chaque fois indépendamment, parmi une simple liaison, -NH- (CₘH₂ₘ) - et/ou -O-(CₘH₂ₘ)-, m représentant un nombre entier de 1 à 4,
R² est choisi, à chaque fois indépendamment, parmi -OM_{1/q}, -SO₃M_{1/q}, -PO₃M_{2/q}, -O-PO₃M_{2/q},-C₆H₄-SO₃M_{1/q}, -C₆H₄-PO₃M_{2/q} et/ou -C₆H₄-OPO₃M_{2/q}, M étant choisi parmi H, les métaux alcalins, les métaux alcalino-terreux, l'aluminium et/ou les métaux de la première série de transition et q représentant le nombre de charge de M, à condition que R² soit représenté par -OM_{1/q} lorsque X représente une simple liaison ; 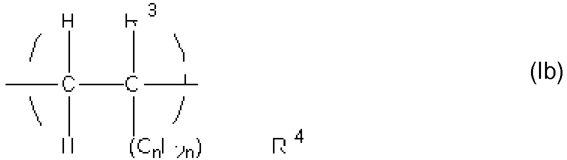
dans laquelle
R³ présente la signification indiquée ci-dessus pour R¹,
n représente un nombre entier de 0 à 4,
R⁴ est choisi, à chaque fois indépendamment, parmi -SO₃M_{1/q}, -PO₃M_{2/q}, -O-PO₃M_{2/q} et/ou -C₆H₄-SO₃M_{1/q}, M et q présentant les significations susmentionnées ; 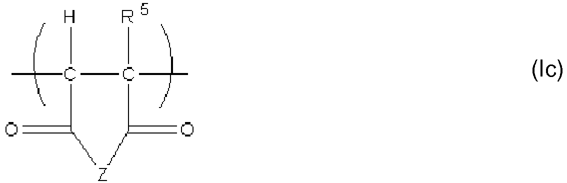
dans laquelle
R⁵ présente la signification indiquée ci-dessus pour R¹,
Z est choisi, à chaque fois indépendamment, parmi -O- et/ou -NH- ; 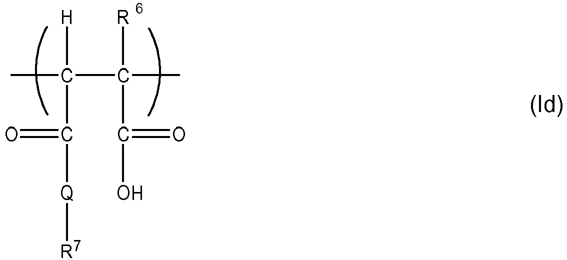
dans laquelle
R⁶ présente la signification indiquée ci-dessus pour R¹,
Q présente la signification indiquée ci-dessus pour X,
R⁷ présente la signification indiquée ci-dessus pour R²_{.}

6. Procédé selon l'une quelconque des revendications 4 ou 5, **caractérisé en ce que** le polymère comprenant des groupes anioniques et/ou anionogènes contient des motifs structuraux de type polyalkylèneglycol.

7. Procédé selon la revendication 6, **caractérisé en ce qu'**au moins un motif structural des formules générales (IIa), (IIb), (IIc) et/ou (IId) est compris comme motif structural de type polyalkylèneglycol : 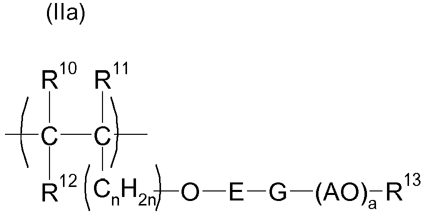 dans laquelle
R¹⁰, R¹¹ et R¹² représentent, indépendamment les uns des autres, H ou un groupe C₁-C₄-alkyle linéaire ou ramifié ;
E représente un groupe C₁-C₆-alkylène linéaire ou ramifié, un groupe cyclohexylène, CH₂-C₆H₁₀, 1,2-phénylène, 1,3-phénylène, ou 1,4-phénylène ;
G représente O, NH ou CO-NH ; ou
E et G représentent, ensemble, une liaison chimique ;
A est identique ou différent et représente, indépendamment, CₓH₂ₓ, où x = 2, 3, 4 ou 5 ou CH₂CH(C₆H₅) ;
n représente 0, 1, 2, 3, 4 et/ou 5 ;
a représente un nombre entier de 2 à 350 ;
R¹³ représente H ou un groupe C₁-C₄-alkyle linéaire ou ramifié, CO-NH₂ et/ou COCH₃ ; 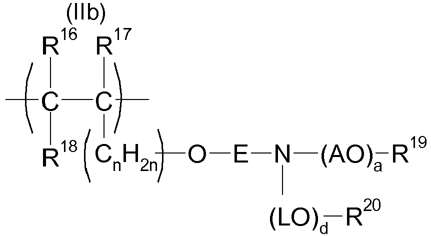
dans laquelle
R¹⁶, R¹⁷ et R¹⁸ représentent, indépendamment les uns des autres, H ou un groupe C₁-C₄-alkyle linéaire ou ramifié ;
E représente un groupe C₁-C₆-alkylène linéaire ou ramifié, un groupe cyclohexylène, CH₂-C₆H₁₀, 1,2-phénylène, 1,3-phénylène, ou 1,4-phénylène ou une liaison chimique ;
A est identique ou différent et représente, indépendamment, CₓH₂ₓ, où x = 2, 3, 4 ou 5 ou CH₂CH(C₆H₅) ;
L est identique ou différent et représente, indépendamment, CₓH₂ₓ, où x = 2, 3, 4 ou 5 ou CH₂CH(C₆H₅) ;
a représente un nombre entier de 2 à 350 ;
d représente un nombre entier de 1 à 350 ;
R¹⁹ représente H ou un groupe C₁-C₄-alkyle linéaire ou ramifié ;
R²⁰ représente H ou un groupe C₁-C₄-alkyle linéaire ; et
n représente 0, 1, 2, 3, 4 ou 5 ; 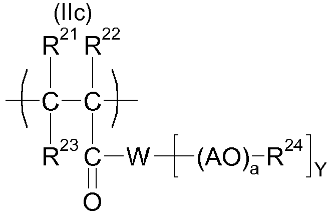
dans laquelle
R²¹, R²² t R²³ représentent, indépendamment les uns des autres, H ou un groupe C₁-C₄-alkyle linéaire ou ramifié ;
W représente O, NR²⁵, N ;
Y représente 1 lorsque W = O ou NR²⁵, et représente 2 lorsque W = N ;
A est identique ou différent et représente, indépendamment, CₓH₂ₓ, où x = 2, 3, 4 ou 5 ou CH₂CH(C₆H₅) ;
a représente un nombre entier de 2 à 350 ;
R²⁴ représente H ou un groupe C₁-C₄-alkyle linéaire ou ramifié ;
R²⁵ représente H ou un groupe C₁-C₄-alkyle linéaire ou ramifié ; 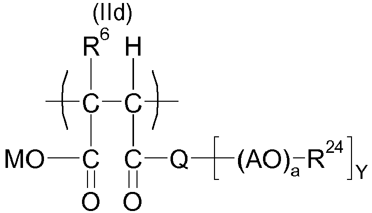
dans laquelle
R⁶ représente H ou un groupe C₁-C₄-alkyle linéaire ou ramifié ;
Q représente NR¹⁰, N ou O ;
Y représente 1 lorsque Q = O ou NR¹⁰, et représente 2 lorsque Q = N ;
R¹⁰ représente H ou un groupe C₁-C₄-alkyle linéaire ou ramifié ;
R²⁴ représente H ou un groupe C₁-C₄-alkyle linéaire ou ramifié ;
A est identique ou différent et représente, indépendamment, CₓH₂ₓ, où x = 2, 3, 4 ou 5 ou CH₂CH(C₆H₅) ;
M représente H et/ou un équivalent cationique ; et
a représente un nombre entier de 2 à 350.

8. Procédé selon l'une quelconque des revendications 1 à 7, **caractérisé en ce que** l'additif rhéologique est une poudre polymère redispersible et est choisi parmi un polymère d'acétate de vinyle, un copolymère d'acétate de vinyle-éthylène, un copolymère d'acétate de vinyle-ester de vinyle et/ou un copolymère d'acétate de vinyle-ester de vinyle-éthylène, les monomères d'ester de vinyle étant à chaque fois choisis dans le groupe formé par le laurate de vinyle, le pivalate de vinyle et le versatate de vinyle, en outre sous forme de copolymère d'acétate de vinyle-ester d'acide acrylique, de copolymère d'acétate de vinyle-ester d'acide acrylique-éthylène, de copolymère de styrène-butadiène et de copolymère de styrène-ester d'acide acrylique, les esters d'acide acrylique étant à chaque fois des esters avec des alcools ramifiés ou non ramifiés comprenant 1 à 10 atomes de carbone.

9. Procédé selon l'une quelconque des revendications 1 à 7, **caractérisé en ce que** le polysaccharide modifié se trouve sous forme de méthylcellulose, de méthylhydroxyéthylcellulose, de méthylhydroxypropylcellulose, d'hydroxyéthylcellulose, d'hydroxypropylcellulose, d'hydroxypropylamidon, d'hydroxyéthylamidon et/ou de méthylhydroxypropylamidon.

10. Procédé selon l'une quelconque des revendications 1 à 9, **caractérisé en ce que** la proportion de silicate de calcium hydraté, par rapport audit ou auxdits additif(s) rhéologique(s), est de 0,5% en poids à 100% en poids.

11. Procédé selon l'une quelconque des revendications 2 à 10, **caractérisé en ce que** la mise en contact dans des conditions déshydratantes est effectuée dans un mélangeur à lit tourbillonnant, de préférence à des températures de 15°C à 100°C, de manière particulièrement préférée de 20°C à 80°C et en particulier de préférence de 30°C à 60°C.
